# EUROPEAN PATENT APPLICATION

(11) **EP 4 794 361 A1**
(43) Date of publication of application: **19.08.2026**
(21) Application number: 24891652.0
(22) Date of filing: 08.10.2024
(51) Int. Cl.: H04W 4/80, H04W 8/00, H04W 4/06, H04W 76/14, H04L 67/1095, H04M 1/72412, G06F 3/16

(54) **ELECTRONIC DEVICE FOR PROVIDING AUDIO SERVICE, AND OPERATING METHOD THEREOF**

(30) Priority: 16.11.2023 KR 20230158869; 24.01.2024 KR 20240010962
(71) Applicant: Samsung Electronics Co., Ltd., Suwon-si, Gyeonggi-do 16677 (KR)
(72) Inventor: JIN, Juyeon, Suwon-si Gyeonggi-do 16677 (KR); KIM, Sanghyeok, Suwon-si Gyeonggi-do 16677 (KR); YOON, Heejae, Suwon-si Gyeonggi-do 16677 (KR); CHEONG, Gupil, Suwon-si Gyeonggi-do 16677 (KR)
(74) Representative: Appleyard Lees IP LLP
(86) International application number: PCT/KR2024/015278
(87) International publication number: WO 2025/105705

(57) **Abstract**

Disclosed is an electronic device comprising: a communication circuit; a processor; and a memory for storing instructions. The instructions, when executed by the processor, can cause the electronic device to: receive first and second ADV packets broadcast from first and second source devices; acquire first and second synchronization information related to first and second PA packets periodically broadcast from the first and second source devices; on the basis of the first and second synchronization information, identify that time intervals for the first PA packet at least partially overlap time intervals for the second PA packet; on the basis that a first time interval for the first PA packet at least partially overlaps a second time interval for the second PA packet, receive the first PA packet in the first time interval; and, on the basis that, after the first PA packet has been received, a third time interval for the first PA packet at least partially overlaps a fourth time interval for the second PA packet, receive the second PA packet in the fourth time interval.

## Description

### [Technical Field]

Various embodiments relate to an electronic device for providing an audio service and a method for operating the same.

### [Background Art]

Bluetooth communication technology may suggest a short-range wireless communication technology that enables electronic devices to be connected to each other for exchanging data or information. Bluetooth communication technology may have Bluetooth legacy (or classic) communication technology or Bluetooth low energy (BLE) communication technology and have various kinds of topology, such as piconet or scatternet.

Recently in wide use are electronic devices adopting Bluetooth communication technology. For example, a pair of earbuds that may be respectively worn on both ears of the user are widely used as an ear-wearable device. An ear-wearable device may provide various functions. For example, an ear-wearable device may include a microphone to collect (or identify) the user's voice, thereby transmitting data for the user's voice to an electronic device (e.g., a smartphone). Further, the ear-wearable device may include a speaker to output the audio data received from an electronic device (e.g., a smartphone) to the speaker.

The ear-wearable device may include a primary earbud (e.g., the right earbud) and a secondary earbud (e.g., the left earbud) that may be connected to an electronic device (e.g., a smartphone). The primary earbud may transmit voice data to the electronic device through connection with the electronic device, and the electronic device may transmit audio data (or audio content) to the primary earbud. The primary earbud may receive audio data (or audio content) from the electronic device through wireless communication and may output the audio data through the speaker. The secondary earbud may be synchronized with the primary earbud, outputting the audio data received from the electronic device through the speaker.

The primary earbud and the secondary earbud (hereinafter referred to as 'earbuds') may be connected to each other based on Bluetooth communication to perform the above operations. To that end, the earbuds may perform inquiry, inquiry scan, page, and page scan based on Bluetooth classic and/or perform BLE advertising and BLE scan based on BLE.

The BLE advertising may mean an operation for periodically broadcasting advertising data through an advertising physical channel, and the BLE scan may mean an operation for monitoring reception of the advertising data.

### [Detailed Description of the Invention]

### [Technical Solution]

An electronic device and a method for operating the same according to embodiments of the disclosure may receive a broadcast service.

An electronic device and an operating method thereof according to embodiments of the disclosure may receive periodic advertising packets from multiple broadcast sources.

An electronic device and an operating method thereof according to embodiments of the disclosure may prevent failure to receive a periodic advertising packet for a broadcast service.

An electronic device and an operating method thereof according to embodiments of the disclosure may receive a periodic advertising packet broadcast during a time duration overlapping a time duration of another communication.

An electronic device according to an embodiment of the disclosure may include communication circuitry, at least one processor operatively coupled to the communication circuitry, and memory storing instructions. The instructions may, when executed by the at least one processor individually or collectively, cause the electronic device to receive a first advertising packet broadcast from a first source device and a second advertising packet broadcast from a second source device. The instructions may, when executed by the at least one processor individually or collectively, cause the electronic device to, based on the first advertising packet and the second advertising packet, acquire first synchronization information related to a first periodic advertising (PA) packet periodically broadcast from the first source device and second synchronization information related to a second PA packet periodically broadcast from the second source device. The instructions may, when executed by the at least one processor individually or collectively, cause the electronic device to, based on the first synchronization information and the second synchronization information, identify that time durations in which the first PA packet is receivable at least partially overlap time durations in which the second PA packet is receivable. The instructions may, when executed by the at least one processor individually or collectively, cause the electronic device to, based on a first time duration in which the first PA packet is receivable being at least partially overlapped with a second time duration in which the second PA packet is receivable, refrain from receiving the second PA packet during the second time duration and receive the first PA packet during the first time duration. The instructions may, when executed by the at least one processor individually or collectively, cause the electronic device to, after receiving the first PA packet, based on a third time duration in which the first PA packet is receivable being at least partially overlapped with a fourth time duration in which the second PA packet is receivable, refrain from receiving the first PA packet during the third time duration and receive the second PA packet during the fourth time duration.

According to an embodiment of the disclosure, in a non-transitory computer-readable storage medium storing one or more programs, the one or more programs may, when executed by at least one processor of an electronic device individually or collectively, cause the electronic device to receive a first advertising packet broadcast from a first source device and a second advertising packet broadcast from a second source device, based on the first advertising packet and the second advertising packet, acquire first synchronization information related to a first periodic advertising (PA) packet periodically broadcast from the first source device and second synchronization information related to a second PA packet periodically broadcast from the second source device, based on the first synchronization information and the second synchronization information, identify that time durations in which the first PA packet is receivable at least partially overlap time durations in which the second PA packet is receivable, based on a first time duration in which the first PA packet is receivable being at least partially overlapped with a second time duration in which the second PA packet is receivable, refrain from receiving the second PA packet during the second time duration and receive the first PA packet during the first time duration, and after receiving the first PA packet, based on a third time duration in which the first PA packet is receivable being at least partially overlapped with a fourth time duration in which the second PA packet is receivable, refrain from receiving the first PA packet during the third time duration and receive the second PA packet during the fourth time duration.

According to an embodiment of the disclosure, a method performed by an electronic device may include an operation of receiving a first advertising packet broadcast from a first source device and a second advertising packet broadcast from a second source device. The method may include an operation of acquiring, based on the first advertising packet and the second advertising packet, first synchronization information related to a first periodic advertising (PA) packet periodically broadcast from the first source device and second synchronization information related to a second PA packet periodically broadcast from the second source device. The method may include an operation of identifying, based on the first synchronization information and the second synchronization information, that time intervals during which the first PA packet is receivable at least partially overlap time intervals during which the second PA packet is receivable. The method may include an operation of, based on a first time interval during which the first PA packet is receivable and a second time interval during which the second PA packet is receivable at least partially overlapping, receiving the first PA packet in the first time interval without receiving the second PA packet in the second time interval. The method may include an operation of, after receiving the first PA packet, based on a third time interval during which the first PA packet is receivable and a fourth time interval during which the second PA packet is receivable at least partially overlapping, receiving the second PA packet in the fourth time interval without receiving the first PA packet in the third time interval.

### [Brief Description of Drawings]

FIG. 1 is a view illustrating an electronic device in a network environment according to an embodiment.
FIG. 2 is a view illustrating connection between electronic devices based on short-range wireless communication according to an embodiment of the disclosure;
FIG. 3 is a view illustrating a configuration of an electronic device supporting short-range wireless communication according to an embodiment;
FIG. 4 is a sequence diagram illustrating a procedure for synchronizing with a broadcast isochronous group (BIG), according to an embodiment of the disclosure.
FIG. 5 is a view illustrating periodic advertising according to an embodiment of the disclosure.
FIG. 6 is a view illustrating BIG information according to an embodiment of the disclosure.
FIG. 7 is a timing diagram for describing reception of BIS audio data based on BIG parameters according to an embodiment of the disclosure.
FIG. 8A is a view illustrating an operation of performing BLE advertising during a non-BIG event duration according to an embodiment of the disclosure.
FIG. 8B is a view illustrating a time duration for receiving periodic advertising data according to an embodiment of the disclosure.
FIG. 9 is a view illustrating an operation of scanning multiple source devices according to an embodiment of the disclosure.
FIG. 10 is a flowchart illustrating a procedure of receiving periodic advertising data according to an embodiment of the disclosure.
FIG. 11 is a flowchart illustrating a procedure of receiving periodic advertising data during a first communication according to an embodiment of the disclosure.
FIG. 12 is a timing diagram illustrating an example of a circumstance in which PA periods overlap among multiple BIS source devices according to an embodiment of the disclosure.
FIG. 13 is a view illustrating an operation of sequentially receiving overlapping PA data according to an embodiment of the disclosure.
FIG. 14 illustrates a sequence diagram for describing an operation of searching for multiple source devices through BIS scanning according to an embodiment of the disclosure.
FIG. 15 illustrates a timing diagram for describing an operation of searching for source devices considering communication with an external electronic device according to an embodiment of the disclosure.
FIG. 16 illustrates a sequence diagram for describing an operation of searching for source devices considering communication with an external electronic device according to an embodiment of the disclosure.
FIG. 17 is a view illustrating a circumstance in which an electronic device operates in an assistant role for sink devices according to an embodiment of the disclosure.
FIG. 18 illustrates an example of a user interface according to an embodiment of the disclosure.
FIG. 19 is a timing diagram for describing an example of a procedure of establishing a first communication link between an electronic device and an external electronic device according to an embodiment of the disclosure.
FIG. 20 is a timing diagram for describing an example of a procedure of establishing communication links between an electronic device and sink devices according to an embodiment of the disclosure.
FIG. 21 illustrates a sequence diagram for describing an operation of sequentially receiving advertising data from multiple source devices through BIS scanning according to an embodiment of the disclosure.
FIG. 22 is a view illustrating an operation of identifying a time duration in which transmissions of PA packets overlap according to an embodiment of the disclosure.
FIG. 23 is a view illustrating an operation of identifying a time duration in which transmission of PA packets overlaps a communication link with a sink device according to an embodiment of the disclosure.
FIG. 24 is a view illustrating an operation of receiving PA packets during an overlapping duration according to an embodiment of the disclosure.
FIG. 25 illustrates a flowchart for describing a procedure of receiving multiple PA data according to whether reception of PA data succeeds according to an embodiment of the disclosure.
FIG. 26 is a view illustrating an operation of determining priorities of PA packets according to an embodiment of the disclosure.
FIG. 27 is a view illustrating an operation of displaying information of PA data that failed to be received according to an embodiment of the disclosure.
FIG. 28 is a view illustrating an operation of receiving PA data based on a user input according to an embodiment of the disclosure.

### [Mode for Carrying out the Invention]

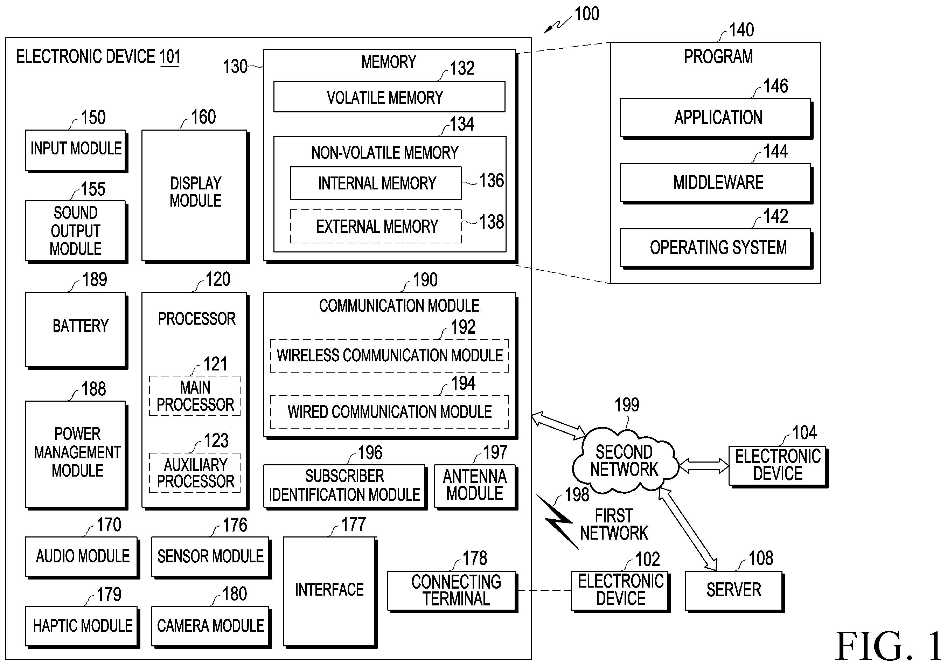

FIG. 1 is a block diagram illustrating an electronic device 101 in a network environment 100, according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{TM}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

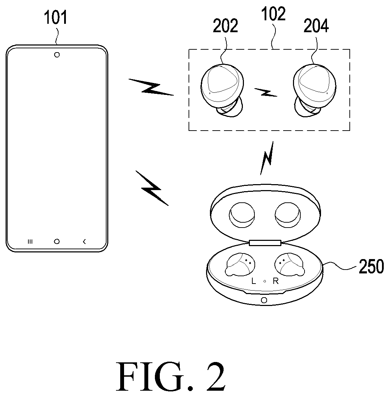

FIG. 2 is a view illustrating connection between electronic devices based on short-range wireless communication according to an embodiment of the disclosure;

Referring to FIG. 2, an electronic device (e.g., the electronic device 101) may be wirelessly connected to an external electronic device 102 (e.g., an ear-wearable device). In an embodiment, the electronic device 101 may be a smartphone, tablet, or laptop computer. In an embodiment, the external electronic device 102 is a true wireless stereo (TWS) device, such as a binaural ear-wearable device, and may include at least one of a first electronic device 202 (e.g., a right earbud) and a second electronic device 204 (e.g., a left earbud).

In an embodiment, the first electronic device 202 and the second electronic device 204 are shown as a pair of earbuds, but the first electronic device 202 and the second electronic device 204 may include not only earbuds but also devices capable of operating in pair. According to an embodiment, the first electronic device 202 and the second electronic device 204 may be implemented to include the same or similar components to each other.

According to an embodiment, the electronic device 101 may establish a connection (e.g., a first communication link or a second communication link) with at least one of the first electronic device 202 or the second electronic device 204 and transmit and/or receive data to/from each other. For example, the electronic device 101 may establish at least one communication link with at least one of the first electronic device 202 and the second electronic device 204 based on short-range wireless communication technology, such as at least one of Wi-Fi or Bluetooth (e.g., Bluetooth classic or Bluetooth low energy (BLE)), or ultra wideband (UWB). However, the scheme in which the electronic device 101 establishes a communication link with the first electronic device 202 and the second electronic device 204 is not limited to at least one of Wi-Fi, Bluetooth, or UWB.

In an embodiment, the electronic device 101 may establish a communication link with only one of the first electronic device 202 or the second electronic device 204 or establish an individual communication link with each of the first electronic device 202 and the second electronic device 204.

In an embodiment, the electronic device 101 may play a role as central, and the external electronic device 102 (e.g., at least one of the first electronic device 202 or the second electronic device 204) may play a role as peripheral. In an audio service, the electronic device 101 operating as central may be a source electronic device, and the external electronic device 102 (e.g., the first electronic device 202 or the second electronic device 204) operating as peripheral may be a sink electronic device.

In an embodiment, the first electronic device 202 and the second electronic device 204 may establish a communication link therebetween based on at least one of, e.g., Wi-Fi, Bluetooth, or UWB, but the scheme for establishing a communication link by the first electronic device 202 and the second electronic device 204 is not limited to at least one of Wi-Fi, Bluetooth, or UWB.

In an embodiment, either the first electronic device 202 or the second electronic device 204 may operate as a primary device, and the other one may operate as a secondary device. The electronic device (e.g., the first electronic device 202) operating as primary may transmit data (e.g., reception acknowledgment signal or relay data) to the electronic device (e.g., the second electronic device 204) operating as secondary. For example, when the first electronic device 202 and the second electronic device 204 establish a communication link with each other, any one of the first electronic device 202 and the second electronic device 204 may be randomly selected as primary, and the other may be selected as secondary.

The electronic device 101, the first electronic device 202, and/or the second electronic device 204 may communicate directly or indirectly with the external electronic device 250. In an embodiment, the external electronic device 250 may be an ear buds case device or cradle device for storing and charging the first electronic device 202 and the second electronic device 204.

According to an embodiment, the external electronic device 250 may establish a connection (e.g., a communication link) with at least one of the electronic device 101, the first electronic device 202 or the second electronic device 204 and transmit and/or receive data to/from each other. For example, the external electronic device 250 may establish a communication link with at least one of the electronic device 101, the first electronic device 202, or the second electronic device 204 based on a Wi-Fi scheme, a Bluetooth scheme (e.g., Bluetooth classic or Bluetooth low energy (BLE)) or UWB scheme, but the scheme in which the external electronic device 250 establishes a communication link with the electronic device 101, the first electronic device 202, or the second electronic device 204 is not limited to at least one of the Wi-Fi scheme, the Bluetooth scheme, or the UWB scheme.

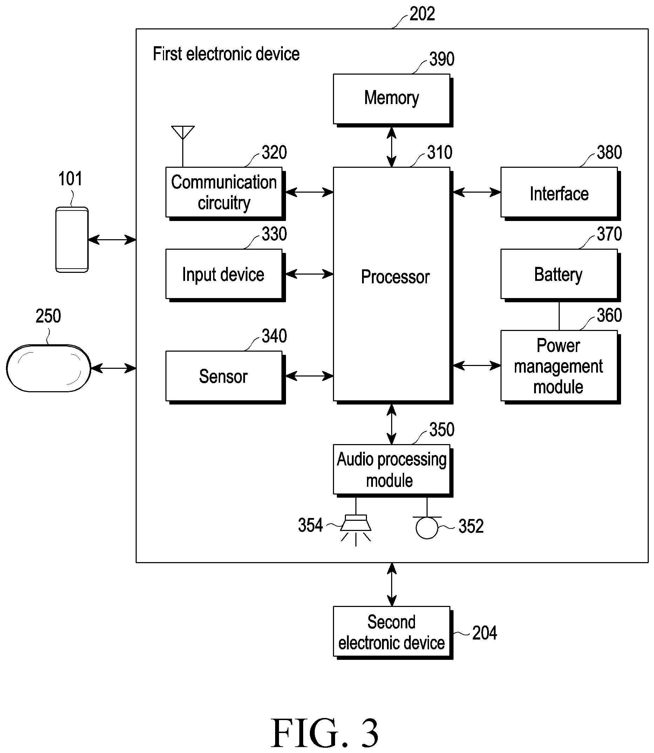

FIG. 3 is a view illustrating a configuration of an electronic device supporting short-range wireless communication according to an embodiment;

Referring to FIG. 3, the electronic device 101 may be wirelessly connected to the electronic devices 202 and 204. The electronic device 101 may be implemented as, e.g., a smartphone but, without limited to those described and/or shown, may be implemented as various types of devices (e.g., notebook computers including standard laptop computers, ultrabooks, or tab books, laptop computers, tablet computers, or desktop computers). The electronic device 101 may be implemented as shown in FIG. 1 and may thus include at least some of the components (e.g., various modules) shown in FIG. 1, and no duplicate description thereof is thus given below.

The electronic devices 202 and 204 may be implemented as wireless earbuds but, without limited to those described and/or shown, may be implemented as various types of devices (e.g., a smart watch, a head-mounted display device, or devices for measuring biometric signals (e.g., heartrate patch)) that supports an audio service as described below. According to an embodiment, when the electronic devices 202 and 204 are wireless earbuds, the first electronic device 202 and the second electronic device 204 may be a pair of devices (e.g., a right earbud and a left earbud). According to an embodiment, the first electronic device 202 and the second electronic device 204 may be implemented to include the same or similar components.

The electronic device 101 may establish a communication connection with at least one of the electronic devices 202 and 204 and transmit and/or receive data to/from each other. For example, each of the electronic devices 202 and 204 may use device-to-device (D2D) communication, such as Wi-Fi direct or Bluetooth, (e.g., using a communication circuit (e.g., the communication circuitry 320) supporting the corresponding communication scheme) to establish a communication connection therebetween but, without limited thereto, may communicate with each other using other various types of communication (e.g., at least one of Wi-Fi communication using access points (APs), cellular communication using base stations, or wired communication).

One (e.g., the first electronic device 202) of the first electronic device 202 and the second electronic device 204 may be a primary device (or a master device or a main device), and the other device (e.g., the second electronic device 204) may be a secondary device (or a slave device or a sub device). The primary device (or the main device) may transmit data to the secondary device. For example, when the first electronic device 202 and the second electronic device 204 establish a communication connection with each other, any one of the first electronic device 202 and the second electronic device 204 may be randomly selected as the primary device, and the other may be selected as the secondary device. In an embodiment, when the first electronic device 202 and the second electronic device 204 establish a communication connection therebetween, the device detected as first worn (e.g., when a value indicating wearing is detected by a wearing detection sensor (e.g., a proximity sensor, a touch sensor, a slope 6-axis sensor, or a 9-axis sensor)) may be selected as the primary device, and the other as the secondary device.

The primary device (e.g., the first electronic device 202) may transmit data received from the electronic device 101 to the secondary device (e.g., the second electronic device 204). For example, the first electronic device 202, which is the primary device, may not only output audio to the speaker 354 based on audio data received from the electronic device 101, but also output the audio data to the second electronic device which is the secondary device. In an embodiment, the second electronic device 204 which is the secondary device may receive the audio data, transmitted from the electronic device 101 to the primary device (e.g., the first electronic device 202), based on the connection information provided from the primary device (e.g., the first electronic device 202).

The first electronic device 202 which is the primary device may transmit the data (e.g., audio data or control data) received from the second electronic device 204 which is the secondary device to the electronic device 101. For example, when a touch event occurs in the second electronic device 204 which is the secondary device, control data including information about the touch event may be transmitted to the electronic device 101 by the first electronic device 202 which is the primary device. However, without limited to those described, the secondary device (e.g., the second electronic device 204) and the electronic device 101 may establish a communication connection therebetween as described above, so that the secondary device and the electronic device 101 may directly perform transmission and/or reception of data therebetween.

The first electronic device 202 may include the same or similar components to at least one of the components (e.g., modules) of the electronic device 101 illustrated in FIG. 1. The first electronic device 202 may include at least one of a processor 310 (e.g., the processor 120 of FIG. 1), communication circuitry 320 (e.g., the communication module 190 of FIG. 1), an input device 330 (e.g., the input module 150 of FIG. 1), a sensor 340 (e.g., the sensor module 176 of FIG. 1), an audio processing module 350 (e.g., the audio module 170 of FIG. 1), a microphone 352 (e.g., the input module 150 of FIG. 1), a speaker 354 (e.g., the sound output module 155 of FIG. 1), a power management module 360 (e.g., the power management module 188 of FIG. 1), a battery 370 (e.g., the battery 189 of FIG. 1), an interface 380 (e.g., the interface 177 of FIG. 1), or memory 390 (e.g., the memory 130 of FIG. 1).

The communication circuitry 320 may include at least one of a wireless communication module (e.g., a Bluetooth communication module, a cellular communication module, a wireless-fidelity (Wi-Fi) communication module, a near-field communication (NFC) communication module, or a global navigation satellite system (GNSS) communication module) or a wired communication module (e.g., a local area network (LAN) communication module or a power line communication (PLC) communication module). As an example, the Bluetooth communication module may support at least one communication connection (e.g., communication link) by Bluetooth legacy communication (e.g., Bluetooth classic) and/or Bluetooth low energy (BLE) communication.

The communication circuitry 320 may directly or indirectly communicate with at least one of the electronic device 101 (e.g., a smartphone), the external electronic device 250 (e.g., a charging device, such as a cradle), or the second electronic device 204 (e.g., the secondary earbud) through a first network (e.g., the first network 198 of FIG. 1), using at least one communication module. The second electronic device 204 may be configured in pair with the first electronic device 202. The communication circuitry 320 may include a transmission circuit and a reception circuit configured to support communication with the electronic device 101 and/or the external electronic device 250. The communication circuitry 320 may include one or more communication processors that are operable independently from the processor 310 and supports wired or wireless communication.

The communication circuitry 320 may be connected with one or more antennas for transmitting signals or information to another electronic device (e.g., the electronic device 101, the second electronic device 204, or the external electronic device 250) or receiving signals or information from the other electronic device. According to an embodiment, at least one antenna appropriate for a communication scheme used in a communication network, such as the first network (e.g., the first network 198 of FIG. 1) or the second network (e.g., the second network 199 of FIG. 2), may be selected from the plurality of antennas by, e.g., the communication circuitry 320. The signal or information may then be transmitted or received between the communication circuitry 320 and another electronic device via the selected at least one antenna.

The input device 330 may be configured to generate various input signals that may be used for operation of the first electronic device 202. The input device 330 may include at least one of a touch pad, a touch panel, or a button.

The input device 330 may generate a user input regarding the turn-on/off of the first electronic device 202. According to an embodiment, the input device 330 may receive a user input for a communication connection between the first electronic device 202 and the second electronic device 204. According to an embodiment, the input device 330 may receive a user input associated with audio data (or audio content). For example, the user input may be associated with functions of starting playback of audio data, pausing playback, stopping playback, adjusting playback speed, adjusting playback volume, or muting.

The sensor 340 may measure or identify the position or operational state of the first electronic device 202. The sensor 340 may convert measured or identified information into an electric signal. The sensor 340 may include at least one of, e.g., a magnetic sensor, an acceleration sensor, a gyro sensor, a geomagnetic sensor, a proximity sensor, a gesture sensor, a grip sensor, a biometric sensor, or an optical sensor.

The processor 310 may detect data (e.g., audio data) from the data packets (e.g., data protocol data units (PDUs)) received from the electronic device 101 and may process the detected data through the audio processing module 350 and output it to the speaker 354. The audio processing module 350 may support an audio data gathering function and reproduce the gathered audio data.

The audio processing module 350 may include an audio decoder (not shown) and a D/A converter (not shown). The audio decoder may convert audio data stored in the memory 390 or received from the electronic device 101 through the communication circuitry 320 into a digital audio signal. The D/A converter may convert the digital audio signal converted by the audio decoder into an analog audio signal. The audio decoder may convert audio data received from the electronic device 101 through the communication circuitry 320 and stored in the memory 390 into a digital audio signal. The speaker 354 may output the analog audio signal converted by the D/A converter.

The audio processing module 350 may include an A/D converter (not shown). The A/D converter may convert the analog audio signal transferred through the microphone 352 (hereinafter, referred to as a mic) into a digital voice signal. The microphone 352 may include at least one air conduction microphone and/or at least one bone conduction microphone for detecting voice and/or sound.

The audio processing module 350 may play various audio data set in the operation of the first electronic device 202. For example, the processor 310 may be designed to detect insertion or removal of the first electronic device 202 into/from the user's ear through the sensor 340 and reproduce audio data regarding an effect sound or guide sound through the audio processing module 350. The output of the sound effect or guide sound may be omitted according to the user setting or the designer's intention.

The memory 390 may store various data used by at least one component (e.g., the processor 310 or the sensor 340) of the first electronic device 202. The various data may include, for example, software and input data or output data for a command related thereto. The memory 390 may include a volatile memory or a non-volatile memory.

The power management module 360 may manage power supplied to the first electronic device 202. According to an embodiment, the power management module 360 may be implemented as at least part of, for example, a power management integrated circuit (PMIC). According to an embodiment, the power management module 360 may include a battery charging module. According to an embodiment, if another electronic device (e.g., one of the electronic device 101, the second electronic device 204, or another electronic device) is electrically connected with the first electronic device 202 (wirelessly or wiredly), the power management module 360 may receive power from the other electronic device to charge the battery 370.

The battery 370 may supply power to at least one component of the first electronic device 202. The battery 370 may include, e.g., a rechargeable battery. According to an embodiment, if the first electronic device 202 is mounted in the cradle device (e.g., the external electronic device 250), the first electronic device 202 may charge the battery 370 to a designated charging level and then power on the first electronic device 202 or turn on at least a portion of the communication circuitry 320.

The interface 380 may support one or more designated protocols that may be used for the first electronic device 202 to directly (e.g., wiredly) connect to the electronic device 101, the second electronic device 204, the external electronic device 250, or another electronic device. The interface 380 may include at least one of, e.g., a high definition multimedia interface (HDMI), a USB interface, an SD card interface, a power line communication (PLC) interface, or an audio interface. According to an embodiment, the interface 380 may include at least one connection port for establishing a physical connection with the cradle device (e.g., the external electronic device 250).

The processor 310 may execute software to control at least one other component (e.g., a hardware or software component) of the first electronic device 202 connected to the processor 310 and may perform various data processing or operations. According to an embodiment, as at least part of the data processing or computation, the processor 310 may load a command or data received from another component (e.g., the sensor 340 or communication circuitry 320) onto a volatile memory 390, process the command or the data stored in the volatile memory 390, and store resulting data in a non-volatile memory.

The processor 310 may receive data (e.g., audio data) from the electronic device 101 and/or external electronic device (not shown) (e.g., a source electronic device) through the communication circuitry 320. The processor 310 may transmit the data, received from the electronic device 101 through the communication circuitry 320, to the second electronic device 204 through the communication circuitry 320. The processor 310 may perform the operations of the first electronic device 202 according to embodiments of the disclosure. The processor 310 may include a physical layer, a link layer, a host, and an application layer for performing Bluetooth communication.

The memory 390 may store instructions that, when executed by processor 310, enable the first electronic device 202 to operate according to embodiments of the disclosure. The memory 390 may store control information and/or data necessary for the operation of the first electronic device 202 under the control of processor 310.

According to embodiments of the disclosure, the first electronic device 202 may further include various circuits and/or modules depending on the form in which it is provided. There are many variations according to the convergence trend of digital devices, so it is not possible to list them all, but components equivalent to the above-mentioned components may be further included in the first electronic device 202. Further, it is apparent that in the first electronic device 202 according to various embodiments, specific components may be excluded from the above components or replaced with other components according to the form in which it is provided. This will be easily understood by those of ordinary skill in the art.

According to an embodiment, the second electronic device 204 configured in pair with the first electronic device 202 may include the same or similar components as those included in the first electronic device 202 and may perform all or some of the operations of the first electronic device 202 described below in connection with the drawings.

The BLE communication link may include at least one of a plurality of physical channels, e.g., an LE piconet physical channel, an LE advertising physical channel, an advertising periodic physical channel, and an LE isochronous physical channel, which may be optimized and used for their different purposes. The LE piconet physical channel may be used for communication between the connected devices and be connected with a specific piconet. The LE advertising physical channel may be used to broadcast advertising (advertisements) to the Bluetooth device. The advertising may be used to discover user data, connect, or send user data to the counterpart electronic device. The advertising periodic physical channel may be used to transmit user data to the counterpart electronic device 101 at specific intervals through periodic advertising. The LE isochronous physical channel may be used to transfer isochronous data between Bluetooth devices in an LE piconet, or to transfer isochronous data between unconnected Bluetooth devices.

An electronic device (e.g., the electronic device 101, the first electronic device 202, or the second electronic device 204) having a Bluetooth core version of 5.2 or higher may support an audio service through a connected isochronous stream (CIS) scheme and/or a broadcast isochronous stream (BIS) based on Bluetooth communication technology.

CIS may refer to logical transport that allows an electronic device (e.g., the electronic device 101, the first electronic device 202, or the second electronic device 204) to transmit isochronous data in any direction. CIS may carry data (e.g., CIS data packets) of a fixed or variable size, and each CIS link may be associated with an asynchronous connection-less (ACL) link. The CIS link may support transmission of variable-sized packets and one or more packets in each isochronous event, and may support a variety of data rates. Data traffic on the CIS link may be unidirectional or bidirectional, and an acknowledgment protocol may be used to enhance the reliability of data transfer on the CIS link.

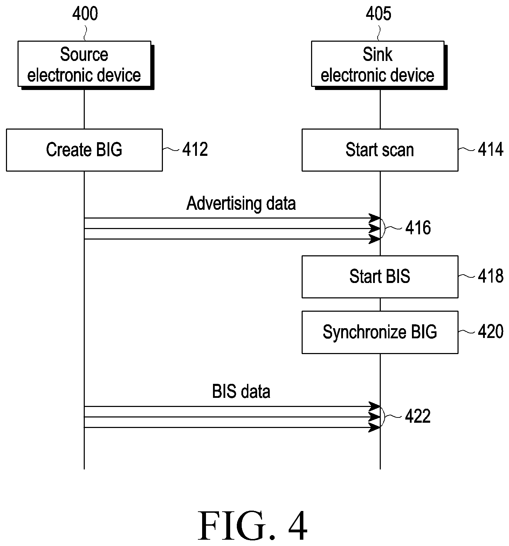

BIS may refer to logical transport used to transmit one or more isochronous data streams to all devices (e.g., the electronic device 101, the first electronic device 202, or the second electronic device 204) for BIS within a specified range. The BIS may include one or more subevents for transmitting isochronous data packets (e.g., BIS data packets). The BIS may support transmission of several new isochronous data packets in all BIS events. The BIS does not include an acknowledgment protocol, and may be transmitted unidirectionally from a broadcasting device (e.g., the source electronic device 400 of FIG. 4) that broadcasts traffic.

To enhance reliability of BIS logical transmission, isochronous data packets may be unconditionally retransmitted by increasing the number of subevents in all events. Transmission reliability may be enhanced by transmitting the isochronous data packets at an interval preceding an interval related to the isochronous data packets. This is referred to as pre-transmission. The BIS may be identified by a unique access address and timing information. The access address and timing information may be transmitted through advertising data (e.g., the AUX_SYNC_IND packet 506) transmitted using a corresponding periodic advertising broadcast logical transmission. A scanning device (e.g., the sink electronic device 405 of FIG. 4) supporting a synchronized receiver role (e.g., a sink role) may receive isochronous data (e.g., isochronous data packets) from the BIS after synchronizing with the BIS using the timing information acquired from periodic advertising data (e.g., the AUX_SYNC_IND packet 506).

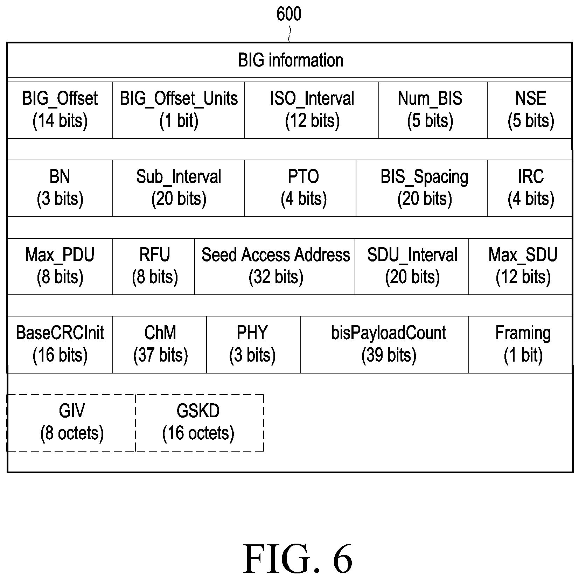

Each BIS may be part of a broadcast isochronous group (BIG). The BIG may include one or more BISs having the same isochronous interval (e.g., ISO_Interval of FIG. 6). BISs in the BIG have a common timing reference based on the source electronic device (e.g., the source electronic device 400 of FIG. 4), and may be temporally synchronized with each other. The maximum number of BISs in the BIG may have a designated value (e.g., 31). BIG may also include control subevents.

FIG. 4 is a sequence diagram illustrating a procedure for synchronizing with a broadcast isochronous group (BIG), according to an embodiment of the disclosure.

Referring to FIG. 4, in operation 412, the source electronic device 400 (e.g., the electronic device 101) may generate a BIG including one or more BISs and may generate BIG parameters (e.g., the BIG information 600 of FIG. 6) related to the BIG. In operation 414, for reception synchronization, the sink electronic device 405 (e.g., at least one of the electronic device 101, the first electronic device 202, or a second electronic device 204) may start BLE scan. In an embodiment, the BLE scan may include an operation of monitoring reception of at least one advertising packet based on the BLE.

In operation 416, the source electronic device 400 may perform advertising that broadcasts advertising data related to the BIG. The advertising data may include extended advertising (EA) data transmitted according to a randomly varying period, such as an ADV_EXT_IND packet and/or an AUX_ADV_IND packet, and periodic advertising (PA) data periodically transmitted at a designated interval, such as an AUX_SYNC_IND packet and/or an AUX_CHAIN_IND packet. The periodic advertising data (e.g., the AUX_SYNC_IND packet) may include BIG parameters (e.g., BIG information 600 of FIG. 6) within, e.g., an additional controller advertising data (ACAD) field. The BIG parameters may be used to synchronize to a BIG (e.g., at least one BIS) provided by the source electronic device 400.

In an embodiment, the sink electronic device 405 may receive periodic advertising data from the source electronic device 400 based on synchronization information (e.g., extended advertising data) received from the source electronic device 400 through the BLE scan of operation 414 or provided from a BIS assistant (e.g., the electronic device 101), and acquire BIG information (e.g., BIG information 600) from the periodic advertising data. In an embodiment, the sink electronic device 405 (e.g., the first electronic device 101) may receive synchronization information required to receive BIG information 600 from the source electronic device 400, and transmit the synchronization information to an external electronic device (e.g., the first electronic device 202 or the second electronic device 204). In an embodiment, the sink electronic device 405 (e.g., the first electronic device 202 or the second electronic device 204) may receive the periodic advertising data from the source electronic device 400 and acquire BIG information (e.g., BIG information 600) from the periodic advertising data, based on synchronization information received from an external electronic device (not illustrated) (e.g., the electronic device 101) operating in a BIS assistant role, without performing BLE scan.

In operation 418, the sink electronic device 405 may determine to start receiving at least one BIS based on the BIG information. In an embodiment, the sink electronic device 405 (e.g., the electronic device 101) may display broadcast service information based on the BIG information and receive a user input requesting a broadcast service according to the broadcast service information.

In operation 420, the sink electronic device 405 may synchronize to a BIG (e.g., at least one BIS) of the source electronic device 400 using BIG parameters included in the BIG information. In an embodiment, the BIG synchronization operation performed by the sink electronic device 405 may include an operation of calculating an access address and timing information where BIS data is transmitted, based on the BIG information. In an embodiment, the timing information may indicate the times of transmission of the audio data and the channel information (e.g., a channel map).

In operation 422, the sink electronic device 405 may receive data (e.g., BIS data packets) broadcast by the source electronic device 400 through at least one BIS within the BIG. In an embodiment, the sink electronic device 405 may receive periodic advertising data at a designated period while receiving BIS data packets, and may receive subsequent BIS data packets based on the received periodic advertising data.

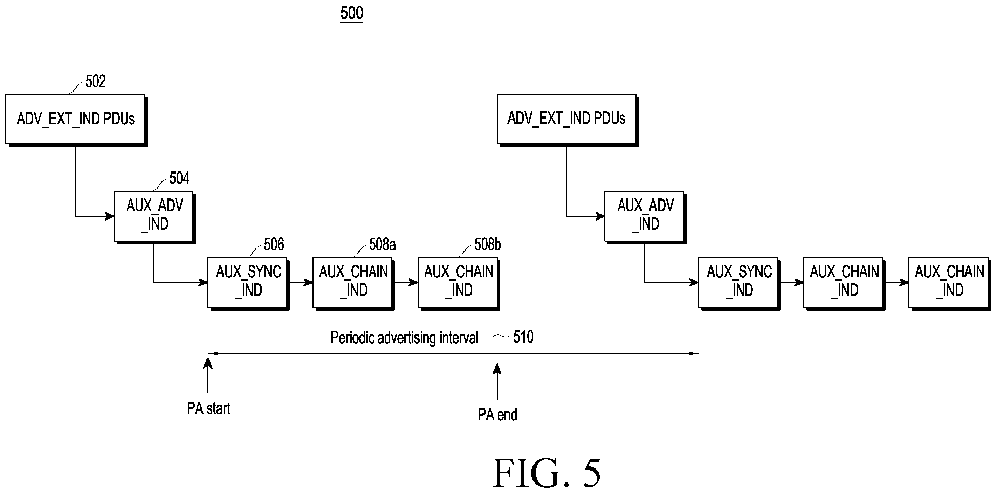

FIG. 5 is a view illustrating periodic advertising according to an embodiment of the disclosure.

Referring to FIG. 5, a periodic advertising train 500 may be used for transmission of extended advertising (EA) data, such as an ADV_EXT_IND packet 502 and/or an AUX_ADV_IND packet 504, and periodic advertising (PA) data, such as an AUX_SYNC_IND packet 506 and/or at least one AUX_CHAIN_IND packet 508a, 508b.

The ADV_EXT_IND packet 502 may be transmitted through a public channel and may include information (e.g., an AuxPtr field) indicating a transmission point of the AUX_ADV_IND packet 504. The AUX_ADV_IND packet 504 may be transmitted according to a specific channel map identified by the ADV_EXT_IND packet 502 and may include information (e.g., an AuxPtr field) indicating a transmission point of the AUX_SYNC_IND packet 506. An electronic device (e.g., the sink electronic device 405 of FIG. 4) that has acquired the AUX_ADV_IND packet 504 may receive the AUX_SYNC_IND packet 506 at the transmission point. The periodic advertising interval 510 may be initiated by transmission of the AUX_SYNC_IND packet 506. The periodic advertising interval 510 may include the AUX_SYNC_IND packet 506 and at least one AUX_CHAIN_IND packet 508a, 508b. The AUX_SYNC_IND packet 506 may include audio information (e.g., BIG information 600 of FIG. 6) related to a broadcast audio service.

FIG. 6 is a view illustrating BIG information according to an embodiment of the disclosure.

Referring to FIG. 6, the BIG information 600 may include BIG parameters, such as at least one of BIG_Offset, BIG_Offset_units, ISO_Interval, Num_BIS, number of subevent (NSE), burst number (BN), Sub_Interval, pre-transmission offset (PTO), BIS_Spacing, immediate repetition count (IRC), Max_PDU, reserved for future use (RFU), SeedAccessAddress, SDU_Interval, Max_SDU, BaseCRCInit, channel map (ChM), physical (PHY), bisPayloadCount, Framing, group initialization vector (GIV), or group session key derivation (GSKD). In an embodiment, the length of the BIG information 600 may be 33 octets when not encrypted, and 57 octets when encrypted.

BIG parameters that may be included in the BIG information 600 will be described below.

Num_BIS indicates the number of BISs in the BIG. Each of the BISs in the BIG may be assigned a different BIS_Number from 1 to Num_BIS.

ISO_Interval may indicate a time of 1.25 ms between two adjacent BIG anchor points. (e.g. 5ms to 4s)

BIS_Spacing may indicate the time between the start time of the subevents in adjacent BISs in the BIG and the start time of the first subevent of the last BIS.

Sub_Interval may indicate the time between start times of two consecutive subevents of each BIS.

Max_PDU is the maximum number of data octets capable of transmitting each BIS data packet within the BIG and may indicate the maximum duration of the packet. (e.g. 1 to 251 octets)

Max_SDU may indicate the maximum size (e.g., maximum duration) of the service data unit (SDU) in the BIG. (e.g. 1 to 4095 octets)

BN, PTO, and IRC may include values for controlling which data is transmitted in each BIG event. Subevents of each BIS event may be divided into groups (e.g., subevent groups) including BN subevents. Thus, the group count (GC)) is NSE/BN. IRC may designate the number of groups carrying data related to the current BIS event. The remaining groups may carry data related to future BIS events designated by the PTO.

IRC may be greater than 0 and may not be greater than GC. If IRC = GC, the PTO may be ignored, otherwise the PTO may be greater than zero. Groups of subevents may be sequentially numbered (e.g., group index g) from 0 to GC-1. When g < IRC, the group g may include data related to the current BIS event. When g >= IRC, group g may include data related to a future BIS event (e.g., PTO * (g - IRC + 1)th BIS event) after the current BIS event.

The NSE indicates the maximum number of subevents within each BIG event.

The framing field may indicate whether the BIG transmits framed data or unframed data.

BIG_Offset may indicate the time from the start time of the packet (e.g., AUX_SYNC_IND of operation 516) including the BIG information 600 to the next BIG anchor point. The value of BIG_Offset may be indicated in units indicated by bits of BIG_Offset_Units. The time offset is determined by multiplying the value of BIG_Offset by the unit indicated by BIG_Offset_Units. The time offset may be greater than 600 µs (micro second). When the bit of BIG_Offset_Units is set, the unit is 300 µs, otherwise 30 µs. The bit of BIG_Offset_Units may not be set if the time offset is less than 491,460 µs. The BIG anchor point may be between the time offset and the time offset plus 1 unit after the start time of the packet (e.g., AUX_SYNC_IND) as follows.

The parameters included in the BIG information 600 may not be changed during the lifetime of the BIG.

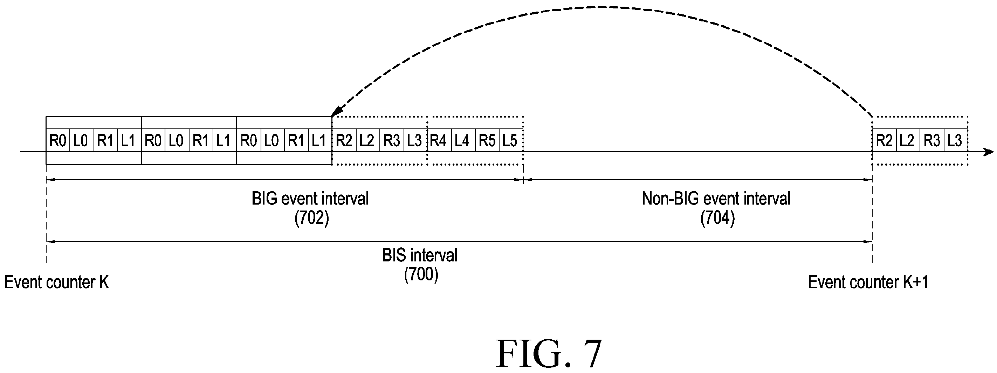

FIG. 7 is a timing diagram for describing reception of BIS audio data based on BIG parameters according to an embodiment of the disclosure.

Referring to FIG. 7, the BIG information (e.g., BIG information 600 of FIG. 6) broadcast by the source electronic device (e.g., source electronic device 400) through periodic advertising may include, e.g., Num_BIS=2 (L/R), ISO_Interval=20ms, BN=2, NSE=10, Sub_Interval=1.188µs, BIS_spacing=594µs, PTO=1, IRC=3, and Max_PDU=100byte. A BIS interval 700 corresponding to the ISO_Interval may include a BIG event duration 702 defined by the BIG parameters.

In an embodiment, within the BIG event duration 702, the source electronic device 400 may repeat a set of BIS data packets corresponding to an event counter K, e.g., R0, L0, R1, and L1, three times, and then transmit future BIS data packets corresponding to an event counter K+1, e.g., a set of R2, L2, R3, and L3 and a set of R4, L4, R5, and L5. Here, Rn may denote an nth right audio data packet, and Ln may denote an nth left audio data packet. The source electronic device 400 or the sink electronic device 405 may regard a period after a last set (e.g., R4, L4, R5, and L5) of the current BIS interval 700 having a designated ISO_Interval length is transmitted and before a next BIS interval (not illustrated) starts, as a non-BIG event duration 704.

Within the non-BIG event duration 704 defined as a remainder except for the BIG event duration 702 within the BIS interval 700, the source electronic device 400 or the sink electronic device 405 may perform communication other than BIS communication. In an embodiment, within the non-BIG event duration 704, the source electronic device 400 may perform BLE advertising so that another sink electronic device (not illustrated) may discover the source electronic device 400. The BLE advertising may include EA advertising transmitting extended advertising data (e.g., the ADV_EXT_IND packet 502 and/or the AUX_ADV_IND packet 504) and PA advertising transmitting periodic advertising data (e.g., the AUX_SYNC_IND packet 506 and/or the AUX_CHAIN_IND packet 508a, 508b).

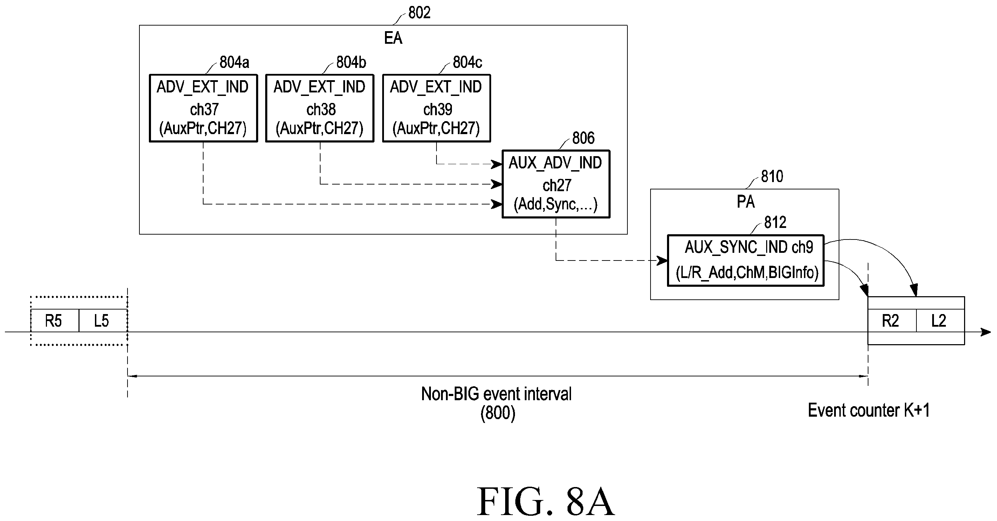

FIG. 8A is a view illustrating an operation of performing BLE advertising during a non-BIG event duration according to an embodiment of the disclosure.

Referring to FIG. 8A, the source electronic device 400 may perform EA advertising 802 during a non-BIG event duration 800 (e.g., the non-BIG event duration 704), after transmitting (e.g., broadcasting) last audio data packets (e.g., R5 and L5) within a BIS interval corresponding to an event counter K (e.g., the BIS interval 700) and before a BIS interval (not illustrated) corresponding to the event counter K.

In an embodiment, through the EA advertising 802, the source electronic device 400 may transmit an ADV_EXT_IND packet 804a on BLE channel 37, transmit an ADV_EXT_IND packet 804b on BLE channel 38, and/or transmit an ADV_EXT_IND packet 804c on BLE channel 39. In an embodiment, the source electronic device 400 may transmit one or more of the ADV_EXT_IND packets 804a, 804b, 804c according to an antenna circumstance. In an embodiment, transmission times of the ADV_EXT_IND packet 804a, the ADV_EXT_IND packet 804b, and the ADV_EXT_IND packet 804c may be randomly determined by the source electronic device 400. At least one of the ADV_EXT_IND packet 804a, the ADV_EXT_IND packet 804b, or the ADV_EXT_IND packet 804c may include offset information (e.g., an AuxPtr field) indicating a transmission time of an AUX_ADV_IND packet 806 and information on a channel (e.g., BLE channel 27) through which the AUX_ADV_IND packet 806 is transmitted.

The source electronic device 400 may transmit the AUX_ADV_IND packet 806 through BLE channel 27 at a time indicated by the AuxPtr field. The source electronic device 400 may perform PA advertising 810 after transmitting the AUX_ADV_IND packet 806. The AUX_ADV_IND packet 806 may include at least one of an access address (Add), synchronization offset information (e.g., a SyncInfo field) indicating a transmission time of an AUX_SYNC_IND packet 812, or a channel map indicating channel(s) through which the AUX_SYNC_IND packet 812 is transmitted. The source electronic device 400 may transmit the AUX_SYNC_IND packet 812 through a BLE channel (e.g., BLE channel 9) indicated by the channel map at a time corresponding to the SyncInfo field through the PA advertising 810.

The AUX_SYNC_IND packet 812 may include BIG information (e.g., BIG information 600 of FIG. 6) together with access addresses (e.g., L/R Add) for left audio and right audio and a channel map indicating channel(s) through which audio data packets are transmitted. The BIG information 600 may include BIG parameters describing a BIG event duration of a next event counter (e.g., event counter K+1). In an embodiment, the BIG information 600 may include BIG parameters identical to or at least partially different from BIG parameters of a previous event counter (e.g., event counter K). The source electronic device 400 may transmit BIS audio data packets corresponding to the event counter K+1 based on the BIG information 600.

A sink electronic device (e.g., the sink electronic device 405) desiring to receive a BIS audio service may search for one or more BIS source devices that may be located in the vicinity. The sink electronic device 405 may discover one or more BIS source devices through BIS scanning. The BIS scanning may include EA scanning monitoring reception of extended advertising data (e.g., the ADV_EXT_IND packet 804a, 804b, 804c and/or the AUX_ADV_IND packet 806) and PA scanning monitoring reception of periodic advertising data (e.g., the AUX_SYNC_IND packet 812). Since the BIG parameters included in the periodic advertising data may be updated by the source electronic device 400, the sink electronic device 405 may continuously receive periodic advertising data after succeeding in receiving the periodic advertising data once.

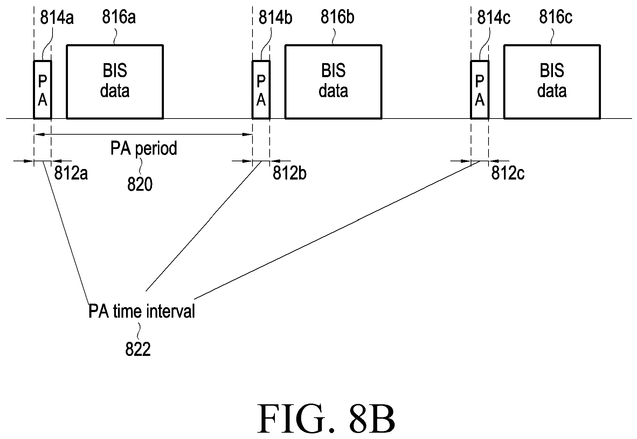

FIG. 8B is a view illustrating a time duration for receiving periodic advertising data according to an embodiment of the disclosure.

Referring to FIG. 8B, the periodic advertising (PA) data (e.g., PA packets 814a, 814b, 814c) may be transmitted during a time duration 822 including a plurality of sub time durations (e.g., durations 812a, 812b, 812c) having a designated uniform interval (e.g., PA period 820). In an embodiment, a first PA packet 814a may be transmitted during a first duration 812a, a second PA packet 814b may be transmitted during a second duration 812b, and a third PA packet 814c may be transmitted during a third duration 812c. Each of the PA packets 814a, 814b, 814c may include a set of BIG parameters related to BIS data 816a transmitted from the same source electronic device (e.g., the source electronic device 400). In an embodiment, at least one BIS event (e.g., transmission of at least one BIS packet) may occur between the PA packets 814a, 814b, 814c.

In an embodiment, the PA packets 814a, 814b, 814c may include identical or different BIG parameters. For example, the source electronic device 400 may transmit the PA packet 814a and the PA packet 814b including BIG parameters having identical values during the first duration 812a and the second duration 812b, respectively, and transmit the PA packet 814c including BIG parameters having at least partially different values from the PA packet 814a and the PA packet 814b during the third duration 812c.

In an embodiment, a sink device (e.g., the sink electronic device 405) may identify the time duration 822 including the durations 812a, 812b, 812c, based on EA data (e.g., the ADV_EXT_IND packet 804a and the AUX_ADV_IND packet 806) received from one source electronic device (e.g., the source electronic device 400). The sink electronic device 405 may receive the PA packet 814a during the first duration 812a and receive the BIS data 816a according to BIG parameters acquired from the PA packet 814a. The sink electronic device 405 may receive the PA packet 814b during the second duration 812b and receive the BIS data 816b according to BIG parameters acquired from the PA packet 814b. The sink electronic device 405 may receive the PA packet 814c during the third duration 812c and receive the BIS data 816c according to BIG parameters acquired from the PA packet 814c.

In an embodiment, when the sink electronic device 405 fails to receive the PA packet 814c during the third duration 812c, the sink electronic device 405 may attempt to receive the BIS data 816c according to pre-stored BIG parameters (e.g., BIG parameters acquired from the PA packet 814b received during the second duration 812b).

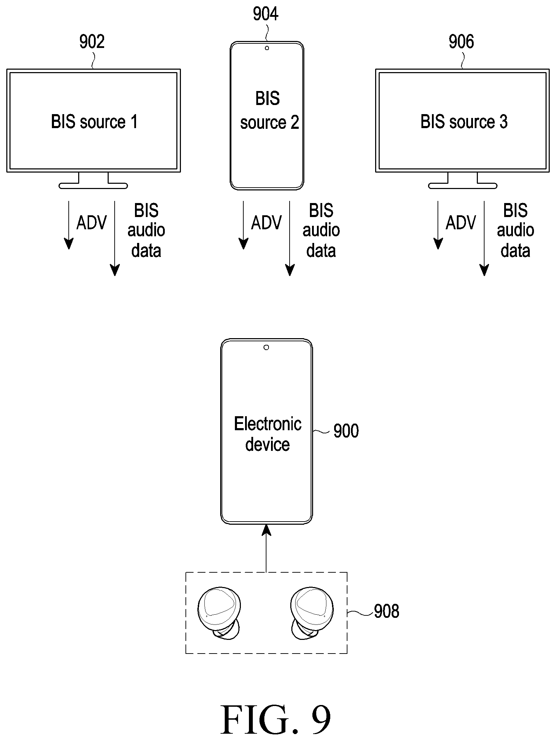

FIG. 9 is a view illustrating an operation of scanning multiple source devices according to an embodiment of the disclosure.

Referring to FIG. 9, an electronic device 900 (e.g., the electronic device 101) may perform a BIS scanning operation, operate in a BIS sink role, and/or operate in a BIS assistant role for an external electronic device 908. In an embodiment, the electronic device 900 may be a smartphone or a tablet PC. At least one of BIS source device 1 902, BIS source device 2 904, and/or BIS source device 3 906 may be configured to provide a broadcast service (e.g., a BIS audio service) using BIS, such as a TV or a smartphone. When the electronic device 900 operates in the BIS sink role, the electronic device 900 may be configured to synchronize to at least one of BIS source device 1 902, BIS source device 2 904, and/or BIS source device 3 906, and receive BIS data from at least one of BIS source device 1 902, BIS source device 2 904, and/or BIS source device 3 906.

The external electronic device 908 (e.g., the first electronic device 202 and/or the second electronic device 204) supports the BIS sink role and may be configured to be directly synchronized to at least one of BIS source device 1 902, BIS source device 2 904, and/or BIS source device 3 906, or be synchronized to at least one of BIS source device 1 902, BIS source device 2 904, and/or BIS source device 3 906 based on an assistant of the electronic device 900. After the external electronic device 908 is synchronized to at least one of BIS source device 1 902, BIS source device 2 904, and/or BIS source device 3 906, the external electronic device 908 may receive BIS data directly (e.g., without going through the electronic device 900) from at least one of BIS source device 1 902, BIS source device 2 904, and/or BIS source device 3 906. The external electronic device 908 may output BIS audio received from at least one of BIS source device 1 902, BIS source device 2 904, and/or BIS source device 3 906 through a speaker (e.g., the speaker 354). In an embodiment, the external electronic device 908 may be ear buds or a Bluetooth speaker.

The electronic device 900 may discover at least one source electronic device (e.g., BIS source device 1 902, BIS source device 2 904, and/or BIS source device 3 906) through BIS scanning (e.g., EA scanning and/or PA scanning). In an embodiment, the electronic device 900 may discover BIS source device 1 902 by receiving advertising data (ADV) (e.g., extended advertising data) broadcast from BIS source device 1 902 (e.g., a TV). In an embodiment, the electronic device 900 may discover BIS source device 2 904 by receiving advertising data (ADV) (e.g., extended advertising data) broadcast from BIS source device 2 904 (e.g., a smartphone). In an embodiment, the electronic device 900 may discover BIS source device 3 906 by receiving advertising data (ADV) (e.g., extended advertising data) broadcast from BIS source device 3 906 (e.g., a tablet PC).

In an embodiment, when the electronic device 900 operates as a sink device of BIS source device 1 902, BIS source device 2 904, and/or BIS source device 3 906, the electronic device 900 may receive BIS audio data from BIS source device 1 902, BIS source device 2 904, and/or BIS source device 3 906 based on BIG information (e.g., BIG information 600) included in the received periodic advertising data.

In an embodiment, when the electronic device 900 operates as an assistant device of the external electronic device 908, the electronic device 900 may transmit at least a portion (e.g., synchronization information for periodic advertising data and/or BIG information 600) of the advertising data received from BIS source device 1 902, BIS source device 2 904, and/or BIS source device 3 906 to the external electronic device 908. The external electronic device 908 may receive periodic advertising data including BIG information 600 from BIS source device 1 902, BIS source device 2 904, and/or BIS source device 3 906 based on the synchronization information. The external electronic device 908 may receive BIS audio data from BIS source device 1 902, BIS source device 2 904, and/or BIS source device 3 906 based on BIG information 600 transmitted from the electronic device 900 or directly received from BIS source device 1 902, BIS source device 2 904, and/or BIS source device 3 906.

Unlike the extended advertising data transmitted at a random period, the periodic advertising data may be transmitted from multiple source electronic devices (e.g., BIS source device 1 902, BIS source device 2 904, and/or BIS source device 3 906) during durations having a designated interval (e.g., an advertising period). When durations during which the source electronic device (e.g., BIS source device 1 902) transmits periodic advertising data overlap corresponding durations of another source electronic device (e.g., BIS source device 2 904 and/or BIS source device 3 906), or when the sink electronic device (e.g., the electronic device 900 or the external device 908) may not perform PA scanning during a PA advertising duration of the source electronic device (e.g., BIS source device 1 902) due to other scheduling, the sink electronic device may not normally receive BIS data of source electronic device 1 902.

According to an embodiment of the disclosure, the electronic device (e.g., the electronic device 900) performing BIS scanning may sequentially receive periodic advertising data from each BIS source device, based on detecting a temporal overlap of the periodic advertising data transmitted by BIS source devices (e.g., BIS source device 1 902, BIS source device 2 904, and/or BIS source device 3 906).

According to an embodiment of the disclosure, the electronic device (e.g., the electronic device 900) performing BIS scanning may display information indicating failure to receive broadcast information of the BIS source devices, based on detecting a temporal overlap of the periodic advertising data transmitted by BIS source devices (e.g., BIS source device 1 902, BIS source device 2 904, and/or BIS source device 3 906).

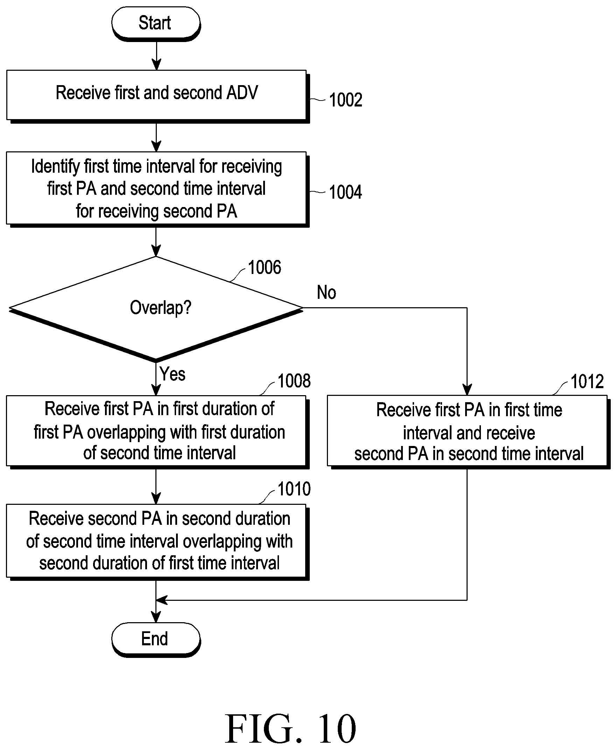

FIG. 10 is a flowchart illustrating a procedure of receiving periodic advertising data according to an embodiment of the disclosure. According to embodiments, at least one of operations described below may be executed by the processor 120 of the electronic device 101. According to embodiments, the memory 130 of the electronic device 101 may store instructions that, when executed by the processor 120, enable the electronic device 101 to perform at least one of the operations described below. According to embodiments, at least one of operations to be described below may be omitted, modified, or executed in a different order.

Referring to FIG. 10, in operation 1002, the electronic device 101 (e.g., the processor 120) may receive a first advertising packet (e.g., EA data, at least one ADV_EXT_IND packet 502 and/or at least one AUX_ADV_IND packet 504) broadcast from source electronic device 1 (e.g., BIS source device 1 902), and receive a second advertising packet (e.g., EA data, at least one ADV_EXT_IND packet 502 and/or at least one AUX_ADV_IND packet 504) broadcast from source electronic device 2 (e.g., BIS source device 2 904).

In operation 1004, the electronic device 101 (e.g., the processor 120) may acquire first synchronization information related to a first time duration (e.g., the PA time duration 822 related to source electronic device 1 902) for receiving a first periodic advertising (PA) packet (e.g., at least one AUX_SYNC_IND packet 506 and/or at least one AUX_CHAIN_IND packet 508a or 508b) periodically broadcast from source electronic device 1 902 based on the first advertising packet, and acquire second synchronization information related to a second time duration (e.g., the PA time duration 822 related to source electronic device 2 904) for receiving a second periodic advertising (PA) packet (e.g., at least one AUX_SYNC_IND packet 506 and/or at least one AUX_CHAIN_IND packet 508a or 508b) periodically broadcast from source electronic device 2 904 based on the second advertising packet.

In an embodiment, the first advertising packet may include the first synchronization information (e.g., a SyncInfo field), and the electronic device 101 (e.g., the processor 120) may identify a first time duration during which the first PA packet is transmitted, based on the first synchronization information. In an embodiment, the first time duration may include one or more durations of a uniform interval during which the first PA packet is transmitted, and a starting point of the durations and the uniform interval may be indicated by the first synchronization information. Source electronic device 1 902 may transmit at least one first PA packet during each duration. In an embodiment, the first synchronization information may indicate durations during which the first PA packet is transmitted. In an embodiment, the first synchronization information may include pointer information indicating a transmission starting point of the first PA packet and information indicating an interval (e.g., an advertising period) where the first PA packet is transmitted.

In an embodiment, the second advertising packet may include the second synchronization information (e.g., a SyncInfo field), and the electronic device 101 (e.g., the processor 120) may identify a second time duration during which the second PA packet is transmitted, based on the second synchronization information. In an embodiment, the second time duration may include one or more durations of a uniform interval during which the second PA packet is transmitted, and a starting point of the durations and the uniform interval may be indicated by the second synchronization information. Source electronic device 2 904 may transmit at least one second PA packet during each duration. In an embodiment, the second synchronization information may indicate durations during which the second PA packet is transmitted. In an embodiment, the second synchronization information may include pointer information indicating a transmission starting point of the second PA packet and information indicating an interval (e.g., an advertising period) where the second PA packet is transmitted.

In operation 1006, the electronic device 101 (e.g., the processor 120) may determine whether the first time duration and the second time duration at least partially overlap. In an embodiment, the first time duration may include a plurality of durations having a uniform interval (e.g., a first interval), and the second time duration may include a plurality of durations having a uniform interval (e.g., a second interval). When at least one of the plurality of durations included in the first time duration at least partially overlaps at least one of the plurality of durations included in the second time duration, the electronic device 101 (e.g., the processor 120) may determine that the first time duration and the second time duration at least partially overlap.

Based on identifying that the first time duration and the second time duration at least partially overlap, the electronic device 101 (e.g., the processor 120) may proceed to operation 1008. Based on identifying that the first time duration and the second time duration do not overlap, the electronic device 101 (e.g., the processor 120) may proceed to operation 1012.

In operation 1008, the electronic device 101 (e.g., the processor 120) may receive the first PA packet during a first duration of the first time duration at least partially overlapped with a first duration of the second time duration, based on a time duration (e.g., the first duration of the first time duration) in which the first PA packet is receivable being at least partially overlapped with a time duration (e.g., the first duration of the second time duration) in which the second PA packet is receivable, without receiving the second PA packet during the first duration of the second time duration. The electronic device 101 (e.g., the processor 120) may receive the first PA packet during the first duration of the first time duration without receiving the second PA packet during the first duration of the second time duration. In an embodiment, the electronic device 101 (e.g., the processor 120) may receive the first PA packet during one or more consecutive durations included in the first time duration.

In an embodiment, the electronic device 101 (e.g., the processor 120) may determine to first receive the first PA packet, which is transmitted earlier, among the first PA packet and the second PA packet. In an embodiment, the electronic device 101 (e.g., the processor 120) may determine to first receive the first PA packet having a higher priority, based on priorities of the first PA packet and the second PA packet. In an embodiment, after receiving the first PA packet, the electronic device 101 (e.g., the processor 120) may change the priority of the first PA packet such that the priority of the first PA packet becomes lower than the priority of the second PA packet.

In operation 1010, the electronic device 101 (e.g., the processor 120) may receive the second PA packet during a second duration of the second time duration at least partially overlapped with a second duration of the first time duration, based on a time duration (e.g., the second duration of the first time duration) in which the first PA packet is receivable being at least partially overlapped with a time duration (e.g., the second duration of the second time duration) in which the second PA packet is receivable, after receiving the first PA packet. The electronic device 101 (e.g., the processor 120) may receive the second PA packet during the second duration of the second time duration without receiving the first PA packet during the second duration of the first time duration, after receiving the first PA packet during the first duration of the first time duration. In an embodiment, the electronic device 101 (e.g., the processor 120) may receive the second PA packet during one or more consecutive durations included in the second time duration.

In an embodiment, the electronic device 101 (e.g., the processor 120) may determine to receive the second PA packet that was not received in operation 1008, among the first PA packet and the second PA packet. In an embodiment, the electronic device 101 (e.g., the processor 120) may determine to receive the second PA packet having a higher priority, based on priorities of the first PA packet and the second PA packet. In an embodiment, after receiving the second PA packet, the electronic device 101 (e.g., the processor 120) may change the priority of the second PA packet such that the priority of the second PA packet becomes lower than the priority of the first PA packet.

In an embodiment, the electronic device 101 (e.g., the processor 120) may receive BIS audio data packets from source electronic device 1 902 and/or receive BIS audio data packets from source electronic device 2 904, based on at least one of the first PA packet and/or the second PA packet.

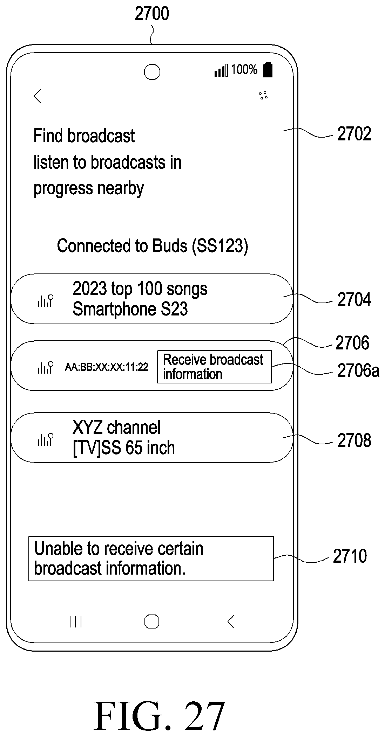

In an embodiment, the electronic device 101 (e.g., the processor 120) may display first broadcast information (e.g., information 2704 of FIG. 27) of source electronic device 1 902 and/or second broadcast information (e.g., information 2706 of FIG. 27) of source electronic device 2 904, based on at least one of the first PA packet and/or the second PA packet. In an embodiment, the first broadcast information may include a broadcast service name and/or a description acquired from BIG information (e.g., BIG information 600 of FIG. 6) included in the first PA packet. In an embodiment, the second broadcast information may include a broadcast service name and/or a description acquired from BIG information (e.g., BIG information 600 of FIG. 6) included in the second PA packet.

In an embodiment, source electronic device 1 902 and/or source electronic device 2 904 may transmit EA data at an arbitrary time. The electronic device 101 (e.g., the processor 120) may receive EA data from source electronic device 1 902 and/or source electronic device 2 904 through BLE scanning (e.g., EA scanning). The electronic device 101 (e.g., the processor 120) may update the first broadcast information and/or the first broadcast information based on the EA data.

In an embodiment, the electronic device 101 (e.g., the processor 120) may transmit at least a portion of the first PA packet and/or the second PA packet to an external electronic device (e.g., the external electronic device 908).

In an embodiment, based on identifying that the first time duration and the second time duration at least partially overlap in operation 1006, the electronic device 101 (e.g., the processor 120) may display information of source electronic device 1 902 and/or information of source electronic device 2 904. In an embodiment, the information of source electronic device 1 902 may include a device name of source electronic device 1 902 acquired from the first advertising packet. In an embodiment, the information of source electronic device 2 904 may include a device name of source electronic device 2 904 acquired from the second advertising packet. After displaying the information of source electronic device 1 902 and/or the information of source electronic device 2 904, the electronic device 101 (e.g., the processor 120) may receive, in response to a user input, either the first PA packet or the second PA packet selected by the user input.

In operation 1012, the electronic device 101 (e.g., the processor 120) may receive the first PA packet during at least one duration of the first time duration, and receive the second PA packet during at least one duration of the second time duration that does not overlap the first time duration, based on the time durations (e.g., durations of the first time duration) in which the first PA packet is receivable and the time durations (e.g., durations of the second time duration) in which the second PA packet is receivable not overlapping.

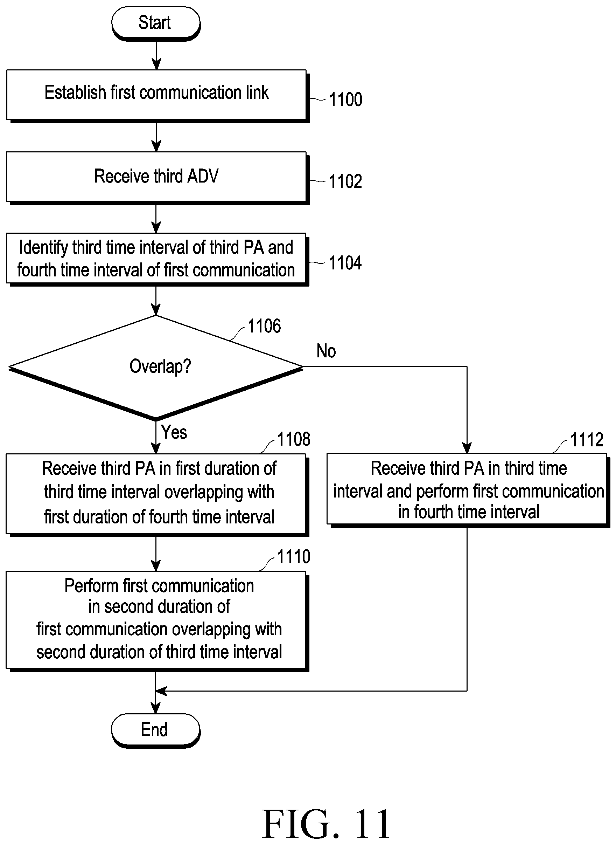

FIG. 11 is a flowchart illustrating a procedure of receiving periodic advertising data during a first communication according to an embodiment of the disclosure. According to embodiments, at least one of operations described below may be executed by the processor 120 of the electronic device 101. According to embodiments, the memory 130 of the electronic device 101 may store instructions that, when executed by the processor 120, enable the electronic device 101 to perform at least one of the operations described below. According to embodiments, at least one of operations to be described below may be omitted, modified, or executed in a different order.

Referring to FIG. 11, in operation 1100, the electronic device 101 (e.g., the processor 120) may establish a first communication link with an external electronic device (e.g., the sink electronic device 908). In an embodiment, the first communication link may include a BLE-based asynchronous connection-oriented (ACL) link. The electronic device 101 (e.g., the processor 120) may identify a fourth time duration allocated for a first communication on the first communication link while establishing the first communication link. The fourth time duration may include one or more durations that may be used for transmission of ACL data packets on the first communication link between the electronic device 101 and the external electronic device. In an embodiment, the fourth time duration may include one or more durations spaced apart by a designated interval.

In operation 1102, the electronic device 101 (e.g., the processor 120) may receive a third advertising packet (e.g., EA data, at least one ADV_EXT_IND packet 502 and/or at least one AUX_ADV_IND packet 504) broadcast from a source electronic device (e.g., at least one of BIS source device 1 902, BIS source device 2 904, or BIS source device 3 906). In an embodiment, the third advertising packet may be the first advertising packet or the second advertising packet of operation 1002, or another advertising packet (e.g., PA data from BIS source device 3 906).

In operation 1104, the electronic device 101 (e.g., the processor 120) may acquire third synchronization information related to a third periodic advertising (PA) packet (e.g., at least one AUX_SYNC_IND packet 506 and/or at least one AUX_CHAIN_IND packet 508a or 508b) periodically broadcast from the source electronic device, based on the third advertising packet.

In an embodiment, the third advertising packet may include the third synchronization information (e.g., a SyncInfo field), and the electronic device 101 (e.g., the processor 120) may identify a third time duration during which the third PA packet is transmitted, based on the third synchronization information. In an embodiment, the third time duration may include one or more durations of a uniform interval during which the third PA packet is transmitted, and a starting point of the durations and the uniform interval may be indicated by the third synchronization information. The source electronic device may transmit at least one third PA packet during each duration.

In operation 1106, the electronic device 101 (e.g., the processor 120) may determine whether the third time duration and the fourth time duration at least partially overlap. In an embodiment, the third time duration may include a plurality of durations having a uniform interval, and the fourth time duration may include a plurality of durations having a uniform or different interval. When at least one of the plurality of durations included in the third time duration at least partially overlaps at least one of the plurality of durations included in the fourth time duration, the electronic device 101 (e.g., the processor 120) may determine that the third time duration and the fourth time duration at least partially overlap.

Based on identifying that the third time duration and the fourth time duration at least partially overlap, the electronic device 101 (e.g., the processor 120) may proceed to operation 1108. Based on identifying that the third time duration and the fourth time duration do not overlap, the electronic device 101 (e.g., the processor 120) may proceed to operation 1112.

In operation 1108, the electronic device 101 (e.g., the processor 120) may receive the third PA packet during a first duration of the third time duration at least partially overlapped with a first duration of the fourth time duration, based on a time duration (e.g., the first duration of the third time duration) in which the first PA packet is receivable being at least partially overlapped with a time duration (e.g., the first duration of the fourth time duration) allocated for the first communication. The electronic device 101 (e.g., the processor 120) may receive the third PA packet during the first duration of the third time duration without performing the first communication through the first communication link during the first duration of the fourth time duration. In an embodiment, the electronic device 101 (e.g., the processor 120) may receive the third PA packet during one or more consecutive durations included in the third time duration.

In an embodiment, the electronic device 101 (e.g., the processor 120) may determine to first receive the third PA packet related to BIS, among a packet of the first communication and the second PA packet. In an embodiment, the electronic device 101 (e.g., the processor 120) may determine to first receive the third PA packet having a higher priority, based on priorities of the first communication and the third PA packet. In an embodiment, when the first communication overlapping the third PA packet fails due to receiving the third PA packet during the first duration, the electronic device 101 (e.g., the processor 120) may change the priority of the first communication to be higher than the priority of the third PA packet, thereby causing the first communication to be performed during a subsequent second duration.

In operation 1110, the electronic device 101 (e.g., the processor 120) may perform the first communication on the first communication link during a second duration of the fourth time duration at least partially overlapped with a second duration of the third time duration, based on a time duration (e.g., the second duration of the third time duration) in which the third PA packet is receivable being at least partially overlapped with a time duration (e.g., the second duration of the fourth time duration) in which the first communication is available, after receiving the third PA packet. The electronic device 101 (e.g., the processor 120) may perform the first communication on the first communication link during the second duration of the fourth time duration without receiving the third PA packet during the second duration of the third time duration, after receiving the third PA packet during the first duration of the third time duration. In an embodiment, the electronic device 101 (e.g., the processor 120) may perform the first communication during one or more consecutive durations included in the fourth time duration.

In an embodiment, the electronic device 101 (e.g., the processor 120) may determine to perform the first communication that was not received in operation 1108, among the first communication and the third PA packet. In an embodiment, the electronic device 101 (e.g., the processor 120) may determine to perform the first communication having a higher priority, based on priorities of the first communication and the third PA packet. In an embodiment, after performing the first communication, the electronic device 101 (e.g., the processor 120) may change the priority of the first communication to be lower than the priority of the third PA packet.

In an embodiment, the electronic device 101 (e.g., the processor 120) may receive BIS audio data packets from the source electronic device, based on the third PA packet.

In an embodiment, the electronic device 101 (e.g., the processor 120) may display third broadcast information of the source electronic device, based on the third PA packet. In an embodiment, the third broadcast information may include a broadcast service name and/or a description acquired from BIG information (e.g., BIG information 600 of FIG. 6) included in the third PA packet.

In an embodiment, the source electronic device may transmit EA data at an arbitrary time. The electronic device 101 (e.g., the processor 120) may receive EA data from the source electronic device through BLE scanning (e.g., EA scanning). The electronic device 101 (e.g., the processor 120) may update the third broadcast information based on the EA data.

In an embodiment, the electronic device 101 (e.g., the processor 120) may transmit at least a portion of the third PA packet to an external electronic device (e.g., the external electronic device 908).

In an embodiment, based on identifying that the third time duration and the fourth time duration at least partially overlap in operation 1106, the electronic device 101 (e.g., the processor 120) may display information of the source electronic device. In an embodiment, the information of the source electronic device may include device information (e.g., a device name and/or a service name) of the source electronic device acquired from the third advertising packet. After displaying the information of the source electronic device, the electronic device 101 (e.g., the processor 120) may receive the third PA packet in response to a user input.

In operation 1112, the electronic device 101 (e.g., the processor 120) may receive the third PA packet during at least one duration of the third time duration, and perform the first communication on the first communication link during at least one duration of the fourth time duration that does not overlap the third time duration, based on the time durations (e.g., durations of the third time duration) in which the third PA packet is receivable and the time durations (e.g., durations of the fourth time duration) allocated for the first communication not overlapping.

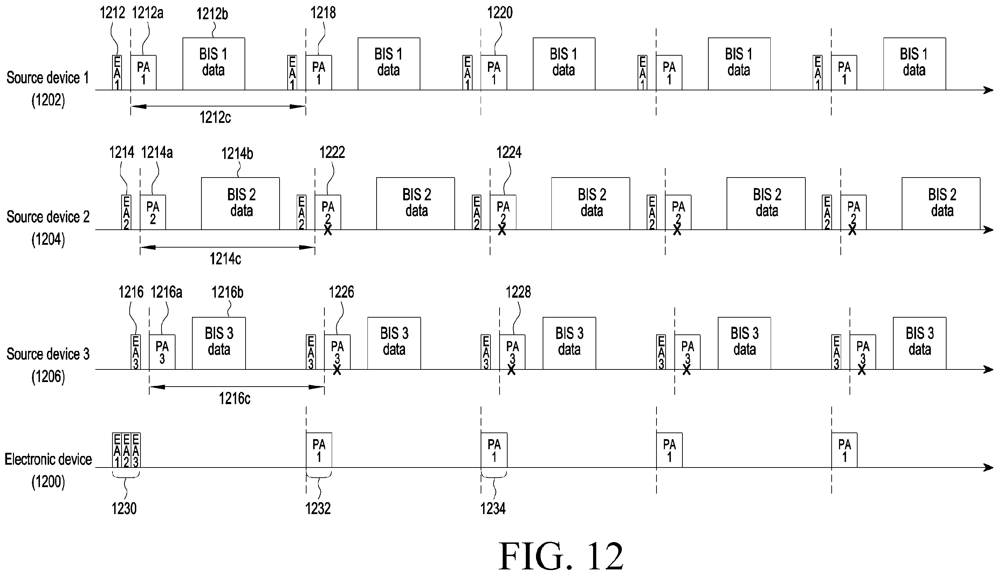

FIG. 12 is a timing diagram illustrating an example of a circumstance in which PA periods overlap among multiple BIS source devices according to an embodiment of the disclosure.

Referring to FIG. 12, source device 1 1202 (e.g., BIS source device 1 902) may transmit an EA1 packet 1212 (e.g., at least one ADV_EXT_IND packet 502 and/or at least one AUX_ADV_IND packet 504) at a designated time (e.g., an arbitrary EA event), transmit a PA1 packet 1212a (e.g., at least one AUX_SYNC_IND packet 506 and/or at least one AUX_CHAIN_IND packet 508a or 508b) during a first duration of a first time duration indicated by the EA1 packet 1212, and transmit BIS1 data 1212b (e.g., at least one R packet and at least one L packet) at a time (e.g., BIS events) indicated by the PA1 packet 1212a. Source device 1 1202 may periodically transmit PA1 data (e.g., PA1 packets 1218, 1220) at a designated interval (e.g., PA1 period 1212c). The PA1 packets 1212a, 1218, 1220 may include identical or different BIG parameters.

Source device 2 1204 (e.g., BIS source device 2 904) may transmit an EA2 packet 1214 (e.g., at least one ADV_EXT_IND packet 502 and/or at least one AUX_ADV_IND packet 504) at a designated time (e.g., an arbitrary EA event), transmit a PA2 packet 1214a (e.g., at least one AUX_SYNC_IND packet 506 and/or at least one AUX_CHAIN_IND packet 508a or 508b) during a first duration of a second time duration indicated by the EA2 packet 1214, and transmit BIS2 data 1214b (e.g., at least one R packet and at least one L packet) at a time (e.g., BIS events) indicated by the PA2 packet 1214a. Source device 2 1204 may periodically transmit PA2 data (e.g., PA2 packets 1222, 1224) at a designated interval (e.g., PA2 period 1214c). The PA2 packets 1214a, 1222, 1224 may include identical or different BIG parameters.

Source device 3 1206 (e.g., BIS source device 3 906) may transmit an EA3 packet 1216 (e.g., at least one ADV_EXT_IND packet 502 and/or at least one AUX_ADV_IND packet 504) at a designated time, transmit a PA3 packet 1216a (e.g., at least one AUX_SYNC_IND packet 506 and/or at least one AUX_CHAIN_IND packet 508a or 508b) during a first duration of a third time duration indicated by the EA3 packet 1216, and transmit BIS3 data 1216b (e.g., at least one R packet and at least one L packet) at a time indicated by the PA3 packet 1216a. Source device 3 1206 may periodically transmit PA3 data (e.g., PA3 packets 1226, 1228) at a designated interval (e.g., PA3 period 1216c). The PA3 packets 1216a, 1226, 1228 may include identical or different BIG parameters.

The electronic device 1200 (e.g., the electronic device 101) may receive the EA1 packet 1212 from source device 1 1202, the EA2 packet 1214 from source device 2 1204, and the EA3 packet 1216 from source device 3 1206 during a time duration 1230 through BLE scanning (e.g., EA scanning). The electronic device 1200 may detect the presence of source device 1 1202, source device 2 1204, and source device 3 1206 providing BIS services through the EA1 packet 1212, the EA2 packet 1214, and the EA3 packet 1216. Based on the EA1 packet 1212, the EA2 packet 1214, and the EA3 packet 1216, the electronic device 1200 may identify that a first time duration during which PA1 data (e.g., PA1 packets 1212a, 1218, 1220) is transmitted by source device 1 1202, a second time duration during which PA2 data (e.g., PA2 packets 1214a, 1222, 1224) is transmitted by source device 2 1204, and a third time duration during which PA3 data (e.g., PA3 packets 1216a, 1226, 1228) is transmitted by source device 3 1206 partially overlap each other.

In an embodiment, the electronic device 1200 may determine to receive any one PA data (e.g., PA1 data) among PA1 data, PA2 data, and PA3 data that overlap each other. In an embodiment, the electronic device 1200 may determine to receive PA1 data that is transmitted first or PA1 data that has the highest priority. In this case, the electronic device 1200 may not receive a PA2 packet 1222 or a PA3 packet 1226 transmitted in an overlapping manner during a duration 1232 during which the PA1 packet 1218 is received. Similarly, the electronic device 1200 may receive a PA1 packet 1220 during a duration 1234 without receiving a PA2 packet 1224 or a PA3 packet 1228 at least partially overlapping transmission of the PA1 packet 1220. When the electronic device 1200 periodically receives PA1 data, the electronic device 1200 may not receive PA data (e.g., PA2 data 1222, 1224 and PA3 data 1226, 1228) from other source electronic devices (e.g., source device 2 1204 and source device 3 1206) transmitted during durations overlapping durations (e.g., durations 1232, 1234) during which PA1 data is transmitted.

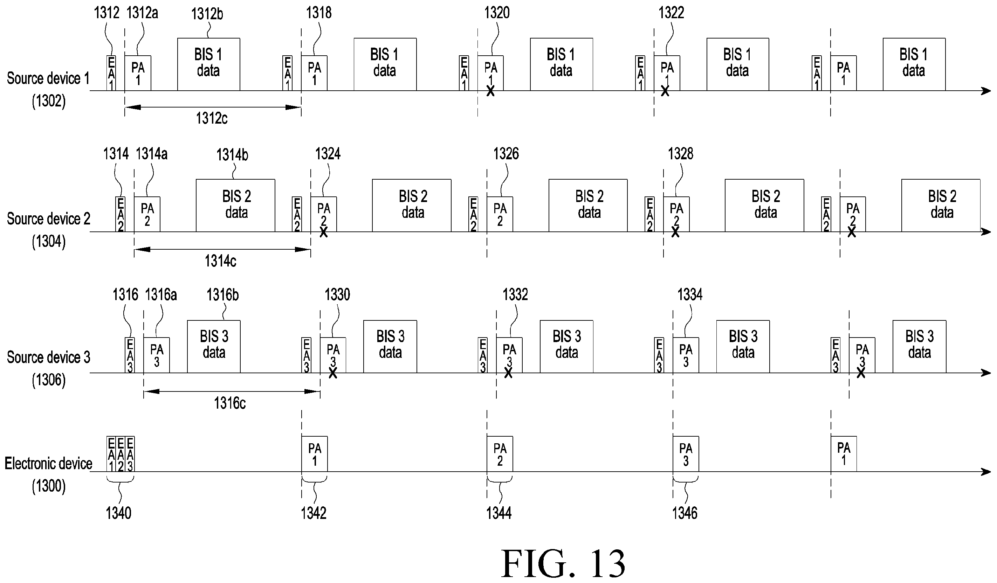

FIG. 13 is a view illustrating an operation of receiving overlapping PA data according to an embodiment of the disclosure.

Referring to FIG. 13, source device 1 1302 (e.g., BIS source device 1 902) may transmit an EA1 packet 1312 (e.g., at least one ADV_EXT_IND packet 502 and/or at least one AUX_ADV_IND packet 504) at a designated time, transmit a PA1 packet 1312a (e.g., at least one AUX_SYNC_IND packet 506 and/or at least one AUX_CHAIN_IND packet 508a or 508b) during a duration indicated by the EA1 packet 1312, and transmit BIS1 data 1312b (e.g., at least one R packet and at least one L packet) at a time indicated by the PA1 packet 1312a. Source device 1 1302 may periodically transmit PA1 data (e.g., PA1 packets 1318, 1320, 1322) at a designated interval (e.g., PA1 period 1312c). The PA1 packets 1312a, 1318, 1320, 1322 may include identical or different BIG parameters.

Source device 2 1304 (e.g., BIS source device 2 904) may transmit an EA2 packet 1314 (e.g., at least one ADV_EXT_IND packet 502 and/or at least one AUX_ADV_IND packet 504) at a designated time, transmit a PA2 packet 1314a (e.g., at least one AUX_SYNC_IND packet 506 and/or at least one AUX_CHAIN_IND packet 508a or 508b) during a duration indicated by the EA2 packet 1314, and transmit BIS2 data 1314b (e.g., at least one R packet and at least one L packet) at a time indicated by the PA2 packet 1314a. Source device 2 1304 may periodically transmit PA2 data (e.g., PA2 packets 1324, 1326, 1328) at a designated interval (e.g., PA2 period 1314c). The PA2 packets 1314a, 1324, 1326, 1328 may include identical or different BIG parameters.

Source device 3 1306 (e.g., BIS source device 3 906) may transmit an EA3 packet 1316 (e.g., at least one ADV_EXT_IND packet 502 and/or at least one AUX_ADV_IND packet 504) at a designated time, transmit a PA3 packet 1316a (e.g., at least one AUX_SYNC_IND packet 506 and/or at least one AUX_CHAIN_IND packet 508a or 508b) during a duration indicated by the EA3 packet 1316, and transmit BIS3 data 1316b (e.g., at least one R packet and at least one L packet) at a time indicated by the PA3 packet 1316a. Source device 3 1306 may periodically transmit PA3 data (e.g., PA3 packets 1330, 1332, 1334) at a designated interval (e.g., PA3 period 1316c). The PA3 packets 1316a, 1330, 1332, 1334 may include identical or different BIG parameters.

The electronic device 1300 may receive the EA1 packet 1312 from source device 1 1302, the EA2 packet 1314 from source device 2 1304, and the EA3 packet 1316 from source device 3 1306 during a time duration 1340 through BLE scanning (e.g., EA scanning). The electronic device 1300 may detect the presence of source device 1 1302, source device 2 1304, and source device 3 1306 providing BIS services through the EA1 packet 1312, the EA2 packet 1314, and the EA3 packet 1316. Based on the EA1 packet 1312, the EA2 packet 1314, and the EA3 packet 1316, the electronic device 1300 may identify that a first time duration during which PA1 data (e.g., PA1 packets 1312a, 1318, 1320, 1322) is transmitted by source device 1 1302, a second time duration during which PA2 data (e.g., PA2 packets 1314a, 1324, 1326, 1328) is transmitted by source device 2 1304, and a third time duration during which PA3 data (e.g., PA3 packets 1316a, 1330, 1332, 1334) is transmitted by source device 3 1306 partially overlap each other.

In an embodiment, the electronic device 1300 may determine to receive any one (e.g., PA1 data) among PA1 data, PA2 data, and PA3 data. In an embodiment, the electronic device 1300 may determine to receive PA1 data that is transmitted first after receiving EA data (EA1, EA2, EA3). In an embodiment, the electronic device 1300 may determine to receive PA1 data that has the highest priority after receiving EA data (EA1, EA2, EA3). The electronic device 1300 may not receive a PA2 packet 1324 or a PA3 packet 1330 overlapping transmission of the PA1 packet 1318 during a duration 1342 during which the PA1 packet 1318 is received.

In an embodiment, after receiving the PA1 packet 1318, the electronic device 1300 may receive other PA data (e.g., a PA2 packet 1326 during a duration 1344 of PA2 data) without receiving a PA1 packet 1320 during a next duration of PA1 data. In an embodiment, after receiving PA1 data, the electronic device 1300 may determine to receive PA2 data that has the highest priority. In an embodiment, after receiving the PA1 packet 1318 and the PA2 packet 1326, the electronic device 1300 may receive yet another PA data (e.g., a PA3 packet 1334 during a duration 1346 of PA3 data) without receiving a PA1 packet 1322 and a PA2 packet 1328 during next durations of PA1 data and PA2 data. In an embodiment, after receiving PA1 data and PA2 data, the electronic device 1300 may determine to receive PA3 data that has the highest priority. After receiving the PA1 packet 1318, the PA2 packet 1326, and the PA3 packet 1334, the electronic device 1300 may receive a PA1 packet during a next duration of PA1 data.

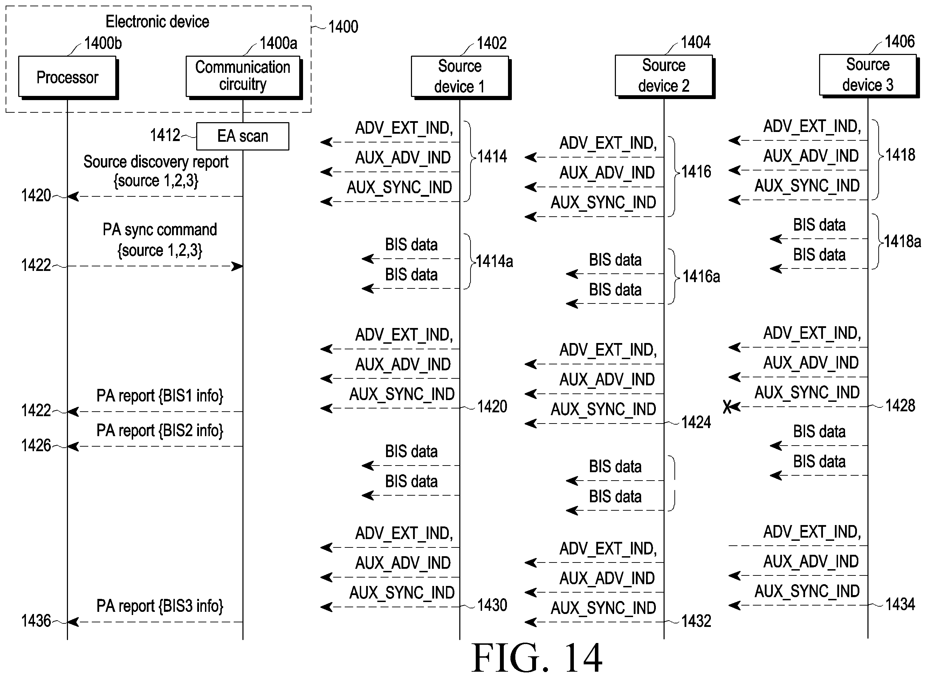

FIG. 14 illustrates a sequence diagram for describing an operation of searching for multiple source devices through BIS scanning according to an embodiment of the disclosure. In an embodiment, the electronic device 1400 (e.g., the electronic device 101) may include communication circuitry 1400a (e.g., the wireless communication module 192) and a processor 1400b (e.g., the processor 120).

Referring to FIG. 14, in operation 1412, the electronic device 1400 (e.g., the communication circuitry 1400a) may perform BIS scanning (e.g., EA scanning) to discover a source device providing a broadcast service. In operation 1414, source device 1 1402 (e.g., BIS source device 1 902) may repeatedly transmit advertising data (e.g., EA data (ADV_EXT_IND and AUX_ADV_IND) and PA data (AUX_SYNC_IND)). In operation 1414a, source device 1 1402 may transmit BIS data (e.g., L packets and R packets) based on the advertising data. In operation 1416, source device 2 1404 (e.g., BIS source device 2 904) may repeatedly transmit advertising data (e.g., EA data (ADV_EXT_IND and AUX_ADV_IND) and PA data (AUX_SYNC_IND)). In operation 1416a, source device 2 1404 may transmit BIS data (e.g., L packets and R packets) based on the advertising data. In operation 1418, source device 3 1406 (e.g., BIS source device 3 906) may repeatedly transmit advertising data (e.g., EA data (ADV_EXT_IND and AUX_ADV_IND) and PA data (AUX_SYNC_IND)). In operation 1418a, source device 3 1406 may transmit BIS data (e.g., L packets and R packets) based on the advertising data.

In an embodiment, at least one of source device 1 1402, source device 2 1404, and source device 3 1406 may periodically transmit PA data according to a designated period after starting BIS. In an embodiment, at least one of source device 1 1402, source device 2 1404, and source device 3 1406 may continuously transmit EA data and PA data, or transmit EA data at a periodic or non-periodic arbitrary time regardless of a period where PA data is transmitted. Although FIG. 14 illustrates EA data and PA data being transmitted together, source device 1 1402, source device 2 1404, and source device 3 1406 may transmit only PA data without EA data during at least one duration.

In operation 1420, the electronic device 1400 (e.g., the communication circuitry 1400a) may transmit a source discovery report to the processor 1400b by receiving ADV_EXT_IND packets and/or AUX_ADV_IND packets from source device 1 1402, source device 2 1404, and source device 3 1406. In operation 1422, the electronic device 1400 (e.g., the processor 1400b) may transmit a PA synchronization command instructing to receive PA data of source device 1 1402, source device 2 1404, and source device 3 1406, to the communication circuitry 1400a.

In operation 1420, source device 1 1402 may transmit an AUX_SYNC_IND packet during a next duration of PA1 data. In operation 1422, the electronic device 1400 (e.g., the communication circuitry 1400a) may transmit a PA report including BIS1 information (e.g., BIG information 600 of FIG. 6) included in the AUX_SYNC_IND packet to the processor 1400b, based on receiving the AUX_SYNC_IND packet.

In operation 1424, source device 2 1404 may transmit an AUX_SYNC_IND packet during a next duration of PA2 data. In operation 1426, the electronic device 1400 (e.g., the communication circuitry 1400a) may transmit a PA report including BIS2 information (e.g., BIG information 600 of FIG. 6) included in the AUX_SYNC_IND packet to the processor 1400b, based on receiving the AUX_SYNC_IND packet.

In operation 1428, source device 3 1406 may transmit an AUX_SYNC_IND packet during a next duration of PA3 data. However, the electronic device 1400 may fail to receive the AUX_SYNC_IND packet from source device 3 1406 due to overlap a duration of PA1 data.

In operation 1430, source device 1 1402 may transmit an AUX_SYNC_IND packet during a next duration of PA1 data. The electronic device 1400 (e.g., the communication circuitry 1400a) may not receive the AUX_SYNC_IND packet based on BIS1 information having already been acquired in operation 1422. In operation 1432, source device 2 1404 may transmit an AUX_SYNC_IND packet during a next duration of PA2 data. In operation 1426, the electronic device 1400 (e.g., the communication circuitry 1400a) may not receive the AUX_SYNC_IND packet based on BIS2 information having already been acquired in operation 1426.

In operation 1434, source device 3 1406 may transmit an AUX_SYNC_IND packet during a next duration of PA3 data. In operation 1436, the electronic device 1400 (e.g., the communication circuitry 1400a) may receive the AUX_SYNC_IND packet based on BIS3 information not having been acquired, and transmit a PA report including BIS3 information (e.g., BIG information 600 of FIG. 6) included in the AUX_SYNC_IND packet to the processor 1400b.

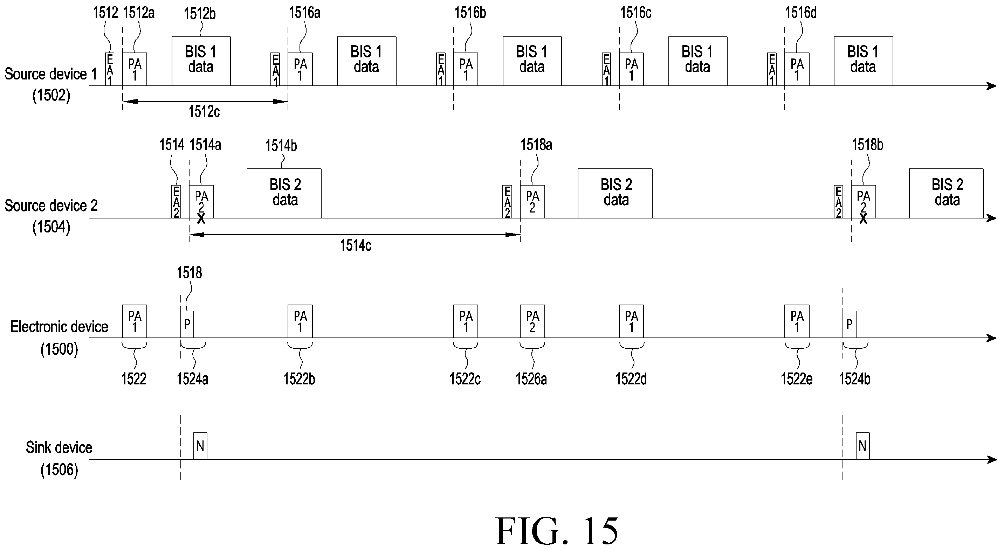

FIG. 15 illustrates a timing diagram for describing an operation of searching for source devices considering communication with an external electronic device according to an embodiment of the disclosure.

Referring to FIG. 15, source device 1 1502 (e.g., BIS source device 1 902) may transmit an EA1 packet 1512 (e.g., at least one ADV_EXT_IND packet 502 and/or at least one AUX_ADV_IND packet 504) at a designated time (e.g., an arbitrary EA event), transmit a PA1 packet 1512a (e.g., at least one AUX_SYNC_IND packet 506 and/or at least one AUX_CHAIN_IND packet 508a or 508b) during a first duration of a first time duration indicated by the EA1 packet 1512, and transmit BIS1 data 1512b (e.g., at least one R packet and at least one L packet) at a time (e.g., a BIS event) indicated by the PA1 packet 1512a. Source device 1 1502 may periodically transmit PA1 data (e.g., PA1 packets 1512a, 1516a, 1516b, 1516c, 1516d) at a designated interval (e.g., PA1 period 1512c). The PA1 packets 1512a, 1516a, 1516b, 1516c, 1516d may include identical or different BIG parameters.

Source device 2 1504 (e.g., BIS source device 2 904) may transmit an EA2 packet 1514 (e.g., at least one ADV_EXT_IND packet 502 and/or at least one AUX_ADV_IND packet 504) at a designated time, transmit a PA2 packet 1514a (e.g., at least one AUX_SYNC_IND packet 506 and/or at least one AUX_CHAIN_IND packet 508a or 508b) during a first duration of a second time duration indicated by the EA2 packet 1514, and transmit BIS2 data 1514b (e.g., at least one R packet and at least one L packet) at a time indicated by the PA2 packet 1514a. Source device 2 1504 may periodically transmit PA2 data (e.g., PA2 packets 1514a, 1518a, 1518b) at a designated interval (e.g., PA2 period 1514c). The PA2 packets 1514a, 1518a, 1518b may include identical or different BIG parameters.

The electronic device 1500 may have a first communication link established with sink device 1506 (e.g., the external electronic device 908). The electronic device 1500 may identify that a third time duration (e.g., durations 1524a, 1524b) allocated for the first communication link at least partially overlaps a second time duration during which PA2 data is transmitted.

In an embodiment, the electronic device 1500 may receive PA1 data (e.g., PA1 packets 1512a, 1516a, 1516b, 1516c, 1516d) during durations 1522, 1522b, 1522c, 1522d, 1522e of a uniform interval (e.g., PA1 period 1512c) that do not overlap other communication (e.g., reception of PA2 data or communication with the sink device 1506). In an embodiment, the electronic device 1500 may not receive a PA2 packet 1514a and exchange packets (e.g., a polling (P) packet and/or a null (N) packet) (e.g., transmit a P packet and receive an N packet) with the sink device 1506 during a duration 1524a partially overlapping a duration of the PA2 packet 1514a among time durations allocated for the first communication link with the sink device 1506.

In an embodiment, based on identifying that the PA2 packet 1514a was not received during the duration 1524a, the electronic device 1500 may receive a PA2 packet 1518a during a duration 1526a of a PA2 packet 1522a overlapping a time duration allocated for the first communication link with the sink device 1506, without performing communication with the sink device 1506.

In an embodiment, the electronic device 1500 may not receive a PA2 packet 1518b and exchange packets (e.g., a P packet and/or an N packet) with the sink device 1506 during a duration 1524b overlapping a duration of the PA2 packet 1518b among time durations allocated for the first communication link with the sink device 1506.

In an embodiment, based on identifying that periodic durations allocated for the first communication link with the sink device 1506 at least partially overlap durations during which PA data (e.g., PA1 data or PA2 data) is transmitted by source device 1 1502 or source device 2 1504, the electronic device 1500 may change (e.g., shift) durations for the first communication link with the sink device 1506.

In an embodiment, the first communication link may include a BLE-based ACL link. The electronic device 1500 may include a designated offset in a link layer (LL) connection update command related to the ACL link and transmit the command to the sink device 1506. The electronic device 1500 may shift durations of the ACL link so as not to overlap periodic durations during which PA1 data or PA2 data is transmitted, through the designated offset.

In an embodiment, the electronic device 1500 may communicate with the sink device 1506 through the first communication link based on a sniff mode of Bluetooth Classic. The electronic device 1500 may include a designated offset (e.g., D_{sniff}) in a sniff setup message of the sniff mode and transmit the message to the sink device 1506. The electronic device 1500 may shift durations of the first communication link so as not to overlap periodic durations during which PA1 data or PA2 data is transmitted, through the designated offset.

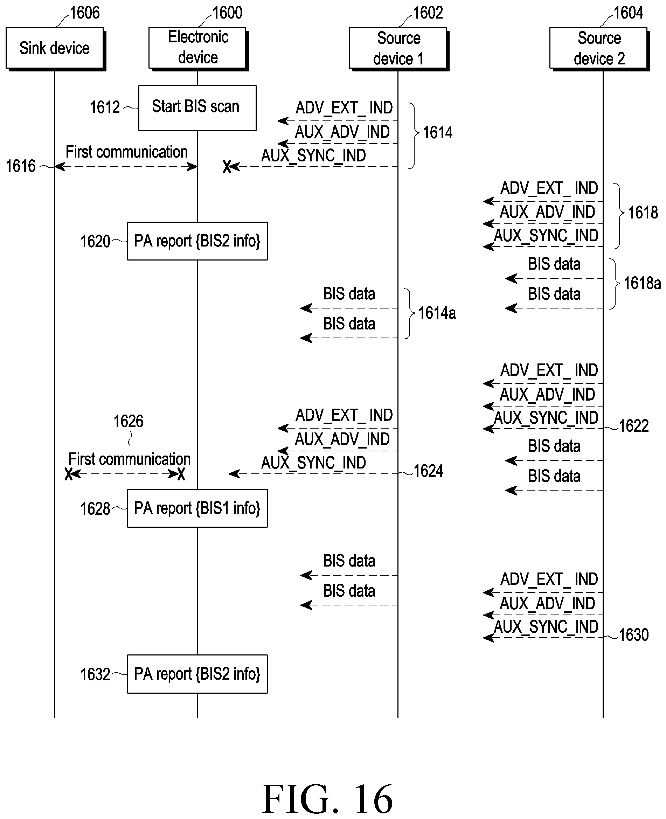

FIG. 16 illustrates a sequence diagram for describing an operation of searching for source devices considering communication with an external electronic device according to an embodiment of the disclosure.

Referring to FIG. 16, in operation 1612, the electronic device 1600 (e.g., the electronic device 900) may start BIS scanning (e.g., EA scanning and/or PA scanning) to discover a source device providing a broadcast service. In operation 1614, source device 1 1602 (e.g., BIS source device 1 902) may transmit advertising data (e.g., EA data (ADV_EXT_IND and AUX_ADV_IND) and PA data (AUX_SYNC_IND)). In operation 1614a, source device 1 1402 may transmit BIS data (e.g., L packets and R packets) based on the advertising data. In operation 1618, source device 2 1604 (e.g., BIS source device 2 904) may repeatedly transmit advertising data (e.g., ADV_EXT_IND, AUX_ADV_IND, and AUX_SYNC_IND). In operation 1618a, source device 2 1604 may transmit BIS data (e.g., L packets and R packets) based on the advertising data.

In an embodiment, the electronic device 1600 may detect the presence of source device 1 1602 and source device 2 1604, based on receiving an ADV_EXT_IND packet and an AUX_ADV_IND packet from source device 1 1602 and receiving an ADV_EXT_IND packet and an AUX_ADV_IND packet from source device 2 1604.

In operation 1616, the electronic device 1600 may have a first communication link established with sink device 1606 (e.g., the external electronic device 908) before or after starting BIS scanning. The electronic device 1600 may fail to receive an AUX_SYNC_IND packet from source device 1 1602 due to a duration during which source device 1 1602 transmits a PA packet (e.g., an AUX_SYNC_IND packet) overlapping a time duration allocated for the first communication link. In an embodiment, the electronic device 1600 may identify that the AUX_SYNC_IND packet from source device 1 1602 overlaps a time duration allocated for the first communication link, based on EA data (e.g., an ADV_EXT_IND packet and/or an AUX_ADV_IND packet) received from source device 1 1602. The electronic device 1600 may succeed in receiving an AUX_SYNC_IND packet from source device 2 1604 because a duration during which source device 2 1604 transmits a PA packet (e.g., an AUX_SYNC_IND packet) does not overlap a time duration allocated for the first communication link. In an embodiment, the electronic device 1600 may identify that the AUX_SYNC_IND packet from source device 2 1604 does not overlap a time duration allocated for the first communication link, based on EA data (e.g., an ADV_EXT_IND packet and/or an AUX_ADV_IND packet) received from source device 2 1604.

In operation 1620, the electronic device 1600 may store BIS2 information (e.g., BIG information 600 of FIG. 6) acquired from the AUX_SYNC_IND packet from source device 2 1604. In an embodiment, the communication circuitry (e.g., the wireless communication module 192) of the electronic device 1600 may transmit a PA report including BIS2 information to a processor (e.g., the processor 120).

In operation 1622, source device 2 1604 may transmit an AUX_SYNC_IND packet during a next duration of PA2 data. In operation 1624, source device 1 1602 may transmit an AUX_SYNC_IND packet during a next duration of PA1 data.

Based on identifying that the AUX_SYNC_IND packet was not received from source device 1 1602 in operation 1616, in operation 1626, the electronic device 1600 may receive an AUX_SYNC_IND packet from source device 1 1602 without performing communication with the sink device 1606. In operation 1628, the electronic device 1600 may store BIS1 information (e.g., BIG information 600 of FIG. 6) acquired from the AUX_SYNC_IND packet from source device 1 1602. In an embodiment, the communication circuitry (e.g., the wireless communication module 192) of the electronic device 1600 may transmit a PA report including BIS1 information to a processor (e.g., the processor 120).

In operation 1630, source device 2 1604 may transmit an AUX_SYNC_IND packet during a next duration of PA2 data. In operation 1632, the electronic device 1600 may store BIS2 information acquired from the AUX_SYNC_IND packet from source device 2 1604.

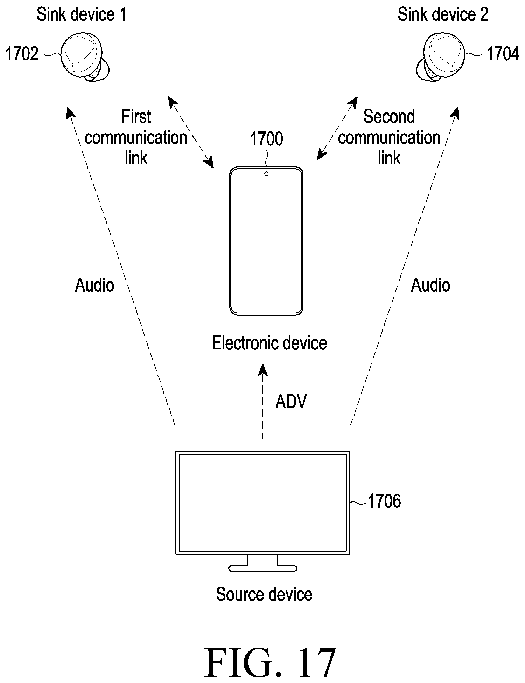

FIG. 17 is a view illustrating a circumstance in which an electronic device operates in an assistant role for sink devices according to an embodiment of the disclosure.

Referring to FIG. 17, the electronic device 1700 (e.g., the electronic device 101) may connect a communication link (e.g., a first communication link and/or a second communication link) with an external electronic device (e.g., sink device 1 1702 and/or sink device 2 1704) operating in a BIS sink role for the source device 1706 providing a BIS audio service. In an embodiment, the electronic device 1700 may discover the presence of sink device 1 1702 and/or sink device 2 1704 and connect to sink device 1 1702 and/or sink device 2 1704, using a wireless communication technology (e.g., BLE, Wi-Fi, and/or UWB).

Sink device 1 1702 and/or sink device 2 1704 may generate advertising data (e.g., ADV_EXT_IND 502, AUX_ADV_IND 504, and/or AUX_SYNC_IND 506) in a multicast manner or a broadcast manner so that a nearby electronic device (e.g., the electronic device 1700) may discover sink device 1 1702 and/or sink device 2 1704. The advertising data may include a signal for connecting to an undesignated nearby electronic device (e.g., the electronic device 1700) or transmitting account-related information, using a wireless communication technology (e.g., BLE). For example, sink device 1 1702 and/or sink device 2 1704 may be stored in a case (e.g., the external electronic device 250), and may be configured to generate advertising data upon detecting that the case is opened while sink device 1 1702 and/or sink device 2 1704 is stored in the case.

In an embodiment, the advertising data may include at least one of device identification information, user account information, information on whether sink device 1 1702 and/or sink device 2 1704 is currently paired with another device (not illustrated) (e.g., current pairing information), a list of previously paired devices (e.g., a pairing list), information on devices that may be simultaneously paired (e.g., simultaneous pairing information), transmission power information, information on a sensing area or a battery level (e.g., battery status information), or audio channel role (e.g., left or right) information.

Sink device 1 1702 and/or sink device 2 1704 may generate advertising data according to a designated condition. In an embodiment, sink device 1 1702 and/or sink device 2 1704 may start transmitting advertising data based on at least one of power supply, a designated time duration, a user input, or case opening.

Upon receiving advertising data from an external electronic device (e.g., sink device 1 1702 and/or sink device 2 1704), the electronic device 1700 may output (e.g., display) a user interface for connection to sink device 1 1702 and/or sink device 2 1704. The electronic device 1700 may output the user interface based on information included in the advertising data. For example, the user interface may include an image corresponding to a discovered external electronic device (e.g., sink device 1 1702 and/or sink device 2 1704).

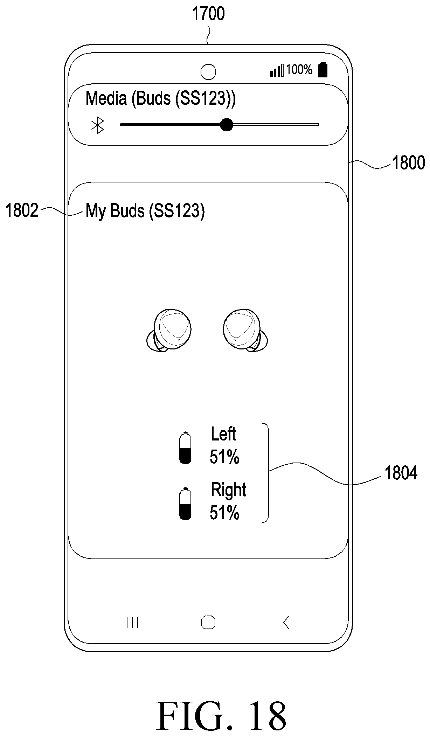

FIG. 18 illustrates an example of a user interface according to an embodiment of the disclosure.

Referring to FIG. 18, the electronic device 1700 may display a user interface 1800 through the display module 160, based on receiving advertising data (e.g., ADV_EXT_IND 502 and/or AUX_ADV_IND 504) from an external electronic device (e.g., sink device 1 1702 and/or sink device 2 1704).

In an embodiment, the user interface 1800 may include device identification information 1802 (e.g., "My Buds (SS123)") and/or battery status information 1804 (e.g., "Left 51% Right 51%"). The device identification information 1802 may include a result (e.g., a device model name or a nickname) of the electronic device 1700 recognizing sink device 1 1702 and/or sink device 2 1704. The device identification information 1802 may include information indicating whether the electronic device 1700 has been previously paired with sink device 1 1702 and/or sink device 2 1704, and/or user account information.

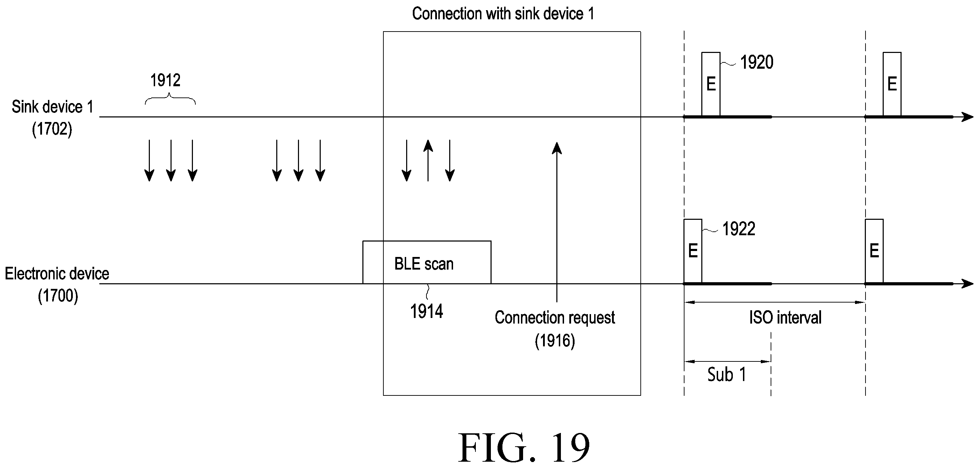

FIG. 19 is a timing diagram for describing an example of a procedure of establishing a first communication link between an electronic device and an external electronic device according to an embodiment of the disclosure.

Referring to FIG. 19, in operation 1912, sink device 1 1702 (e.g., the first electronic device 202) may periodically transmit advertising data (e.g., ADV_EXT_IND 502, AUX_ADV_IND 504, and/or AUX_SYNC_IND 506) so that the electronic device 1700 may discover sink device 1 1702. In operation 1914, the electronic device 1700 may receive advertising data from sink device 1 1702 through BLE scanning. In operation 1916, the electronic device 1700 may transmit a connection request to sink device 1 1702 based on information acquired from the advertising data.

In operations 1920 and 1902, the electronic device 1700 and sink device 1 1702 may complete establishment of a first communication link (e.g., an ACL link) between the electronic device 1700 and sink device 1 1702 by exchanging designated packets (e.g., empty (E) packets 1920, 1922) (e.g., transmitting an E packet and receiving an E packet). The E packets 1920, 1922 may be transmitted during a first sub interval (e.g., sub 1) of a first ISO interval of the first communication link.

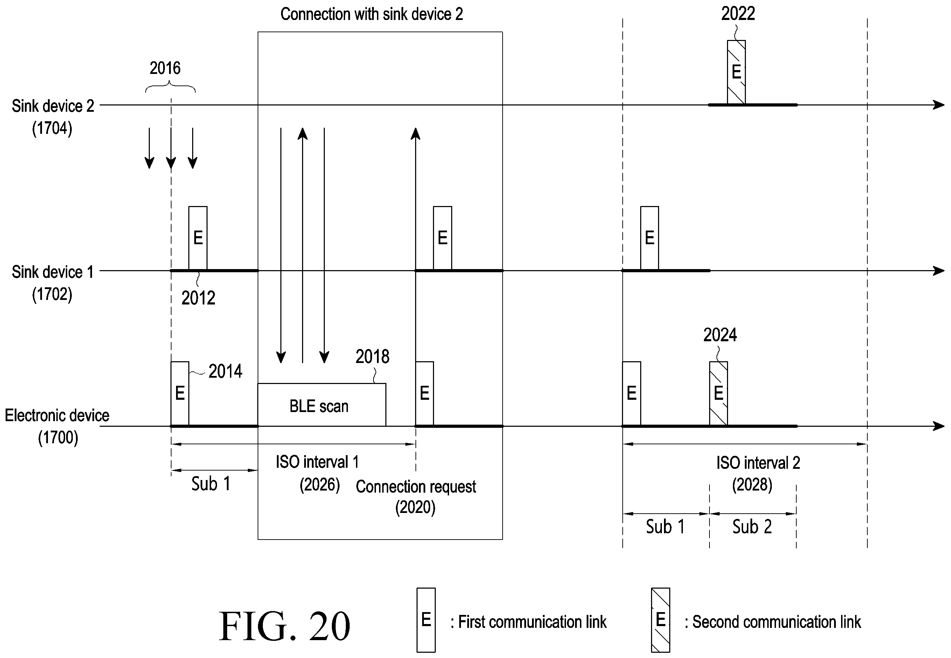

FIG. 20 is a timing diagram for describing an example of a procedure of establishing communication links between an electronic device and sink devices according to an embodiment of the disclosure.

Referring to FIG. 20, in operations 2012 and 2014, the electronic device 1700 may have already established a first communication link with sink device 1 1702 and exchange designated packets (e.g., E packets 2012, 2014) through the first communication link. The E packets 2012, 2014 may be transmitted during each first sub interval (e.g., sub 1) of each ISO interval (e.g., ISO interval 1 2026) of the first communication link.

In operation 2016, sink device 2 1704 (e.g., the second electronic device 204) may periodically transmit advertising data (e.g., ADV_EXT_IND 502, AUX_ADV_IND 504, and/or AUX_SYNC_IND 506) so that the electronic device 1700 may discover sink device 2 1704. In operation 2018, the electronic device 1700 may receive advertising data from sink device 2 1704 through BLE scanning. In operation 2020, the electronic device 1700 may transmit a connection request to sink device 2 1704 based on information acquired from the advertising data.

In operations 2022 and 2024, the electronic device 1700 and sink device 2 1704 may complete establishment of a second communication link (e.g., an ACL link) between the electronic device 1700 and sink device 2 1704 by exchanging designated packets (e.g., E packets 2022, 2024). The E packets 2022, 2024 may be transmitted during a second sub interval (e.g., sub 2) of a first ISO interval (e.g., ISO interval 2 2028) of the second communication link.

Sink device 1 1702 and sink device 2 1704 may exchange BIS-related information (e.g., synchronization information) with the electronic device 1700 and/or receive a start command or a stop command of a BIS service through the first communication link and the second communication link.

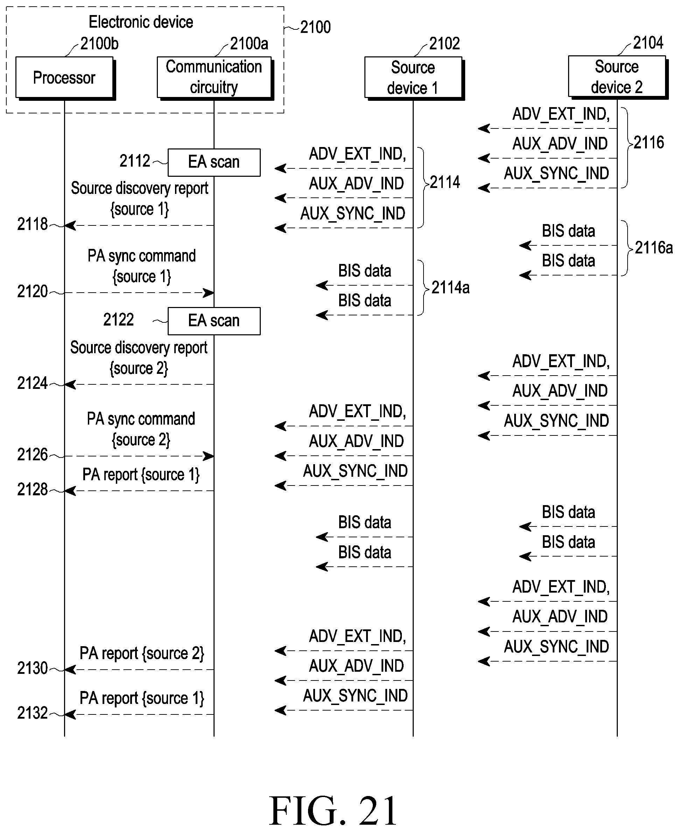

FIG. 21 illustrates a sequence diagram for describing an operation of sequentially receiving advertising data from multiple source devices through BIS scanning according to an embodiment of the disclosure. In an embodiment, the electronic device 2100 (e.g., the electronic device 101) may include communication circuitry 2100a (e.g., the wireless communication module 192) and a processor 2100b (e.g., the processor 120).

Referring to FIG. 21, in operation 2112, the electronic device 2100 (e.g., the communication circuitry 2100a) may perform BIS scanning (e.g., EA scanning) to discover a source device providing a broadcast service. In an embodiment, the electronic device 2100 (e.g., the processor 2100b) may control the communication circuitry 2100a to search for nearby BIS sources through BIS scanning, based on a user input through a search menu.

In operation 2114, source device 1 2102 (e.g., BIS source device 1 902) may repeatedly transmit advertising data (e.g., ADV_EXT_IND, AUX_ADV_IND, and AUX_SYNC_IND). In operation 2114a, source device 1 2102 may transmit BIS data (e.g., L packets and R packets) based on the advertising data. In operation 2116, source device 2 2104 (e.g., BIS source device 2 904) may repeatedly transmit advertising data (e.g., ADV_EXT_IND, AUX_ADV_IND, and AUX_SYNC_IND). In operation 2116a, source device 2 2104 may transmit BIS data (e.g., L packets and R packets) based on the advertising data.

In operation 2118, the electronic device 2100 (e.g., the communication circuitry 2100a) may transmit a source discovery report of source device 1 2102 to the processor 2100b by receiving an EA1 packet (e.g., ADV_EXT_IND packets and/or AUX_ADV_IND packets) from source device 1 2102. The electronic device 2100 (e.g., the communication circuitry 2100a) may report first synchronization information related to a PA1 packet acquired from the EA1 packet to the processor 2100b. In an embodiment, the first synchronization information may indicate durations during which the PA1 packet is transmitted. In an embodiment, the first synchronization information may include pointer information indicating a transmission starting point of the PA1 packet and information indicating an interval where the PA1 packet is transmitted.

In operation 2120, the electronic device 2100 (e.g., the processor 2100b) may transmit a PA synchronization command instructing to receive a PA1 packet of source device 1 2102 to the communication circuitry 2100a. The electronic device 2100a may start periodically receiving a PA1 packet (e.g., an AUX_SYNC_IND packet) during durations of a uniform interval (e.g., an advertising period) identified based on first synchronization information in the EA1 packet, based on the PA synchronization command.

In operation 2122, the electronic device 2100 (e.g., the communication circuitry 2100a) may continue to perform BIS scanning (e.g., EA scanning) to discover another source device providing a broadcast service. In operation 2124, the electronic device 2100 (e.g., the communication circuitry 2100a) may transmit a source discovery report of source device 2 2104 to the processor 2100b by receiving an EA2 packet (e.g., ADV_EXT_IND packets and/or AUX_ADV_IND packets) from source device 2 2104. The electronic device 2100 (e.g., the communication circuitry 2100a) may report second synchronization information related to a PA2 packet acquired from the EA2 packet to the processor 2100b. In an embodiment, the second synchronization information may indicate durations during which the PA2 packet is transmitted. In an embodiment, the second synchronization information may include pointer information indicating a transmission starting point of the PA2 packet and information indicating an interval where the PA2 packet is transmitted.

In operation 2126, the electronic device 2100 (e.g., the processor 2100b) may transmit a PA synchronization command instructing to receive a PA2 packet of source device 2 2104 to the communication circuitry 2100a. The electronic device 2100 may start periodically receiving a PA2 packet (e.g., an AUX_SYNC_IND packet) during durations of a uniform interval (e.g., an advertising period) identified based on second synchronization information in the EA1 packet, based on the PA synchronization command.

In operation 2128, the electronic device 2100 (e.g., the communication circuitry 2100a) may transmit a PA report including a PA1 packet (e.g., an AUX_SYNC_IND packet) received from source device 1 2102 to the processor 2100b, based on the PA synchronization command of operation 2120.

When source device 2 2104 is newly discovered through EA scanning while receiving a PA packet from source device 1 2102, the electronic device 2100 may additionally schedule reception of a PA2 packet from source device 2 2104, in addition to reception of a PA1 packet from source device 1 2102. In an embodiment, when source device 2 2104 is newly discovered after receiving a PA1 packet from source device 1 2102 at least once, the electronic device 2100a may determine to receive a PA2 packet without receiving a PA1 packet during a duration of the PA2 packet at least partially overlapping a duration of the PA1 packet.

In operation 2130, the electronic device 2100 (e.g., the communication circuitry 2100a) may transmit a PA report including a PA2 packet (e.g., an AUX_SYNC_IND packet) received from source device 2 2104 to the processor 2100b, based on the PA synchronization command of operation 2126. In an embodiment, after receiving a PA2 packet from source device 2 2104 at least once, the electronic device 2100 may determine to receive a PA1 packet without receiving a PA2 packet during a next duration of the PA1 packet at least partially overlapping a duration of the PA2 packet.

In operation 2132, the electronic device 2100 (e.g., the communication circuitry 2100a) may transmit a PA report including a PA1 packet (e.g., an AUX_SYNC_IND packet) received from source device 1 2102 to the processor 2100b, based on the PA synchronization command of operation 2120.

In an embodiment, the electronic device 2100 may identify time durations during which multiple source devices (e.g., source device 1 2102 and source device 2 2104) transmit PA packets through EA scanning. Within each time duration, a PA packet may be continuously transmitted during periodic durations having a designated interval. The electronic device 2100 may calculate time durations during which PA packets are transmitted by the multiple source devices, and identify that the time durations at least partially overlap. In an embodiment, when a first time duration for receiving a PA1 packet from source device 1 2102 and a second time duration for receiving a PA2 packet from source device 2 2104 overlap, the electronic device 2100 may identify that a PA2 packet was not received during a first duration of the second time duration, based on receiving a PA1 packet from source device 1 2102 during a first duration of the first time duration.

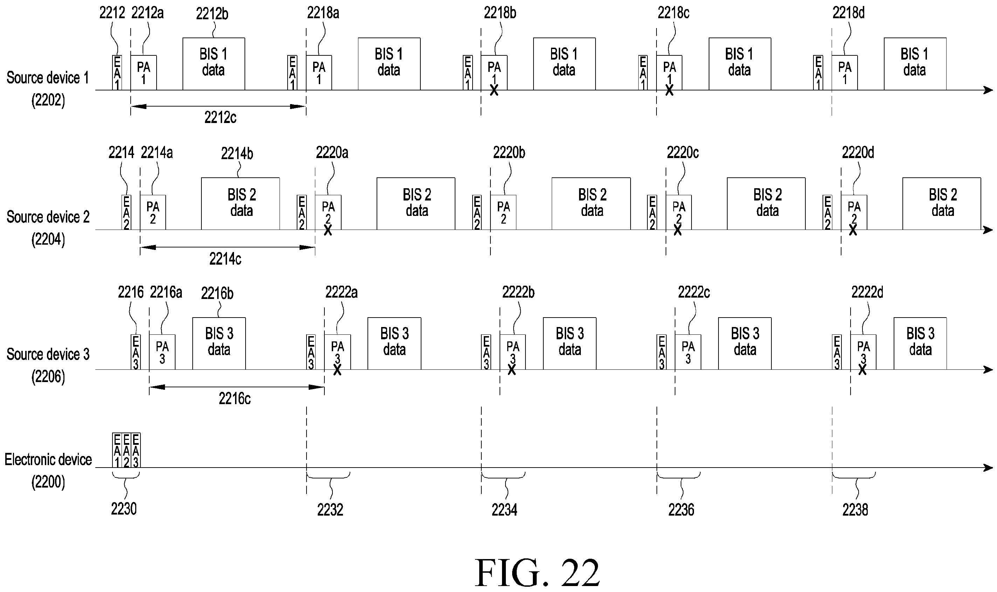

FIG. 22 is a view illustrating an operation of identifying a time duration in which transmissions of PA packets overlap according to an embodiment of the disclosure.

Referring to FIG. 22, source device 1 2202 (e.g., BIS source device 1 902) may transmit an EA1 packet 2212 (e.g., at least one ADV_EXT_IND packet 502 and/or at least one AUX_ADV_IND packet 504) at a designated time (e.g., an arbitrary EA event), transmit a PA1 packet 2212a (e.g., an AUX_SYNC_IND packet 506) during a first duration of a first time duration indicated by the EA1 packet 2212, and transmit BIS1 data 2212b (e.g., at least one R packet and at least one L packet) at a time (e.g., BIS events) indicated by the PA1 packet 2212a. Source device 1 2202 may periodically transmit PA1 data (e.g., PA1 packets 2212a, 2218a, 2218b, 2218c, 2218d) during durations of a designated interval (e.g., PA1 period 2212c). The PA1 packets 2212a, 2218a, 2218b, 2218c, 2218d may include identical or different BIG parameters.

Source device 2 2204 (e.g., BIS source device 2 904) may transmit an EA2 packet 2214 (e.g., at least one ADV_EXT_IND packet 502 and/or at least one AUX_ADV_IND packet 504) at a designated time (e.g., an arbitrary EA event), transmit a PA2 packet 2214a (e.g., an AUX_SYNC_IND packet 506) during a first duration of a second time duration indicated by the EA2 packet 2214, and transmit BIS2 data 2214b (e.g., at least one R packet and at least one L packet) at a time (e.g., BIS events) indicated by the PA2 packet 2214a. Source device 2 2204 may periodically transmit PA2 data (e.g., PA2 packets 2214a, 2220a, 2220b, 2220c, 2220d) during durations of a designated interval (e.g., PA2 period 2214c). The PA2 packets 2214a, 2220a, 2220b, 2220c, 2220d may include identical or different BIG parameters.

Source device 3 2206 (e.g., BIS source device 3 906) may transmit an EA3 packet 2216 (e.g., at least one ADV_EXT_IND packet 502 and/or at least one AUX_ADV_IND packet 504) at a designated time (e.g., an arbitrary EA event), transmit a PA3 packet 2216a (e.g., an AUX_SYNC_IND packet 506) during a first duration of a third time duration indicated by the EA3 packet 2216, and transmit BIS3 data 2216b (e.g., at least one R packet and at least one L packet) at a time (e.g., BIS events) indicated by the PA3 packet 2216a. Source device 3 2206 may periodically transmit PA3 data (e.g., PA3 packets 2216a, 2222a, 2222b, 2222c, 2222d) during durations of a designated interval (e.g., PA3 period 2216c). The PA3 packets 2216a, 2222a, 2222b, 2222c, 2222d may include identical or different BIG parameters.

The electronic device 2200 (e.g., the electronic device 101) may receive the EA1 packet 2212 from source device 1 2202, the EA2 packet 2214 from source device 2 2204, and the EA3 packet 2216 from source device 3 2206 during a time duration 2230 through BLE scanning (e.g., EA scanning). The electronic device 2200 (e.g., the electronic device 101) may detect the presence of source device 1 2202, source device 2 2204, and source device 3 2206 providing BIS services through the EA1 packet 2212, the EA2 packet 2214, and the EA3 packet 2216.

Based on the EA1 packet 2212, the EA2 packet 2214, and the EA3 packet 2216, the electronic device 2200 may identify that a first time duration during which PA1 data (e.g., PA1 packets 2212a, 2218a, 2218b, 2218c, 2218d) is transmitted by source device 1 2202, a second time duration during which PA2 data (e.g., PA2 packets 2214a, 2220a, 2220b, 2220c, 2220d) is transmitted by source device 2 2204, and a third time duration during which PA3 data (e.g., PA3 packets 2216a, 2222a, 2222b, 2222c, 2222d) is transmitted by source device 3 2206 partially overlap each other.

The electronic device 2200 may identify a duration 2232 during which transmissions of a PA1 packet 2218a, a PA2 packet 2220a, and a PA3 packet 2222a partially overlap. In an embodiment, the electronic device 2200 may receive the PA1 packet 2218a during the duration 2232, based on the EA1 packet 2212 being received first among the EA packets 2212, 2214, 2216. During the duration 2232, the electronic device 2200 may not receive the PA2 packet 2220a and the PA3 packet 2222a. Although not illustrated, in an alternative embodiment, the electronic device 2200 may consecutively receive at least two PA1 packets (e.g., the PA1 packet 2218a and a PA1 packet 2218b) during at least two consecutive durations.

The electronic device 2200 may identify a duration 2234 during which transmissions of a PA1 packet 2218b, a PA2 packet 2220b, and a PA3 packet 2222b partially overlap. In an embodiment, the electronic device 2200 may receive the PA2 packet 2220b during the duration 2234, based on the EA2 packet 2214 being received second among the EA packets 2212, 2214, 2216 and the PA1 packet 2218a being successfully received during a previous duration (e.g., the duration 2232). During the duration 2234, the electronic device 2200 may not receive the PA1 packet 2218b and the PA3 packet 2222b. Although not illustrated, in an alternative embodiment, the electronic device 2200 may consecutively receive at least two PA2 packets (e.g., the PA2 packet 2220b and a PA2 packet 2220c) during at least two consecutive durations.

The electronic device 2200 may identify a duration 2236 during which transmissions of a PA1 packet 2218c, a PA2 packet 2220c, and a PA3 packet 2222c partially overlap. In an embodiment, the electronic device 2200 may receive a PA3 packet 2222c during the duration 2236, based on the EA3 packet 2216 being received last among the EA packets 2212, 2214, 2216 and the PA1 packet 2218a and the PA2 packet 2220b being successfully received during previous durations (e.g., the durations 2232, 2234). During the duration 2236, the electronic device 2200 may not receive the PA1 packet 2218c and the PA2 packet 2220c. Although not illustrated, in an alternative embodiment, the electronic device 2200 may consecutively receive at least two PA3 packets (e.g., the PA3 packet 2222c and a PA3 packet 2222d) during at least two consecutive durations.

The electronic device 2200 may identify a duration 2238 during which transmissions of a PA1 packet 2218d, a PA2 packet 2220d, and a PA3 packet 2222d partially overlap. In an embodiment, the electronic device 2200 may receive the PA1 packet 2218d during the duration 2238, based on the PA1 packet 2218a, the PA2 packet 2220b, and the PA3 packet 2222c being successfully received during previous durations (e.g., the durations 2232, 2234, 2236).

In an embodiment, the electronic device 2200 may set priorities of PA data identified by the EA packets 2212, 2214, 2216. For example, the priorities of PA data may have a higher value in the order of receiving the EA packets 2212, 2214, 2216 first. The electronic device 2200 may receive PA data having the highest priority during a time duration (e.g., the durations 2232, 2234, 2236, 2238) during which transmissions of PA data overlap.

In an embodiment, the electronic device 2200 may decrease the priority of successfully received PA data by a designated value or to a designated value. For example, after successfully receiving the PA1 packet 2218a during the duration 2232, the electronic device 2200 may decrease the priority of the PA1 packet 2218b. Based on the decreased priority of the PA1 packet 2218b, the electronic device 2200 may receive the PA2 packet 2220b during a next duration (e.g., the duration 2234) and decrease the priority of a PA2 packet 2220c.

In an embodiment, the electronic device 2200 may increase the priority of PA data other than the successfully received PA data by a designated value. For example, after successfully receiving the PA1 packet 2218a during the duration 2232, the electronic device 2200 may increase the priority of the PA2 packet 2220b. Based on the increased priority of the PA2 packet 2220b, the electronic device 2200 may receive the PA2 packet 2220b during a next duration (e.g., the duration 2234).

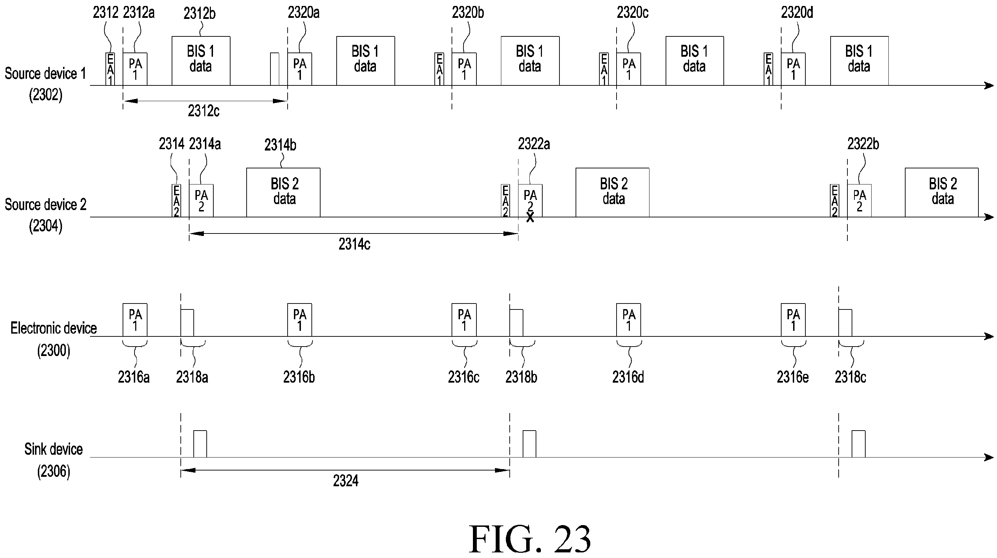

FIG. 23 is a view illustrating an operation of identifying a time duration in which transmission of PA packets overlaps a communication link with a sink device according to an embodiment of the disclosure.

Referring to FIG. 23, source device 1 2302 (e.g., BIS source device 1 902) may transmit an EA1 packet 2312 (e.g., at least one ADV_EXT_IND packet 502 and/or at least one AUX_ADV_IND packet 504) at a designated time, transmit a PA1 packet 2312a (e.g., an AUX_SYNC_IND packet 506) during a first duration, and transmit BIS1 data 2312b (e.g., at least one R packet and at least one L packet) at a time indicated by the PA1 packet 2312a. Source device 1 2302 may periodically transmit PA1 data (e.g., PA1 packets 2312a, 2320a, 2320b, 2320c, 2320d) during durations of a designated interval (e.g., PA1 period 2312c). The PA1 packets 2312a, 2320a, 2320b, 2320c, 2320d may include identical or different BIG parameters.

Source device 2 2304 (e.g., BIS source device 2 904) may transmit an EA2 packet 2314 (e.g., at least one ADV_EXT_IND packet 502 and/or at least one AUX_ADV_IND packet 504) at a designated time, transmit a PA2 packet 2314a (e.g., an AUX_SYNC_IND packet 506) during a first duration, and transmit BIS2 data 2314b (e.g., at least one R packet and at least one L packet) at a time indicated by the PA2 packet 2314a. Source device 2 2304 may periodically transmit PA2 data (e.g., PA2 packets 2314a, 2322a, 2322b) during durations of a designated interval (e.g., PA2 period 2314c). The PA2 packets 2314a, 2322a, 2322b may include identical or different BIG parameters.

The electronic device 2300 (e.g., the electronic device 101) may have a first communication link connected with sink device 2306 (e.g., the external electronic device 908). The electronic device 2300 may identify a time duration (e.g., durations 2318a, 2318b, 2318c) allocated for exchanging data packets (e.g., transmitting a P packet and receiving an N packet) with the sink device 2306 through the first communication link. In an embodiment, the durations 2318a, 2318b, 2318c may be spaced apart by a designated uniform interval (e.g., first communication period 2324) (e.g., an ISO interval). In an embodiment, the electronic device 2300 may transmit a P packet at a first portion of a first duration 2318a and receive an N packet at a second portion.

In an embodiment, durations 2318a, 2318b, 2318c allocated for the first communication link may not overlap durations during which PA1 data is transmitted, and the electronic device 2300 may receive PA1 packets 2312a, 2320a, 2320b, 2320c, 2320d during periodic durations 2316a, 2316b, 2316c, 2316d, 2316e of PA1 data, respectively, without interference with the first communication link.

The electronic device 2300 may identify that the durations 2318a, 2318b, 2318c allocated for the first communication link partially overlap durations during which PA2 data is transmitted. In an embodiment, the electronic device 2300 may identify that the durations 2318a, 2318b, 2318c for the first communication link partially overlap durations during which PA1 packets 2314a, 2322a, 2322b are transmitted, respectively. In an embodiment, the electronic device 2300 may alternately perform communication (e.g., transmitting a P packet and receiving an N packet) through the first communication link and reception of at least one of the PA1 packets 2314a, 2322a, 2322b during the durations 2318a, 2318b, 2318c.

In an embodiment, the electronic device 2300 may set priorities of communication through the first communication link and reception of PA data, based on a transmission frequency of PA data (e.g., PA2 packets 2314a, 2322a, 2322b) overlapping communication through the first communication link. For example, when a first communication period 2324 corresponding to an interval between the durations 2318a, 2318b, 2318c is not shorter than the PA2 period 2314c, the electronic device 2300 may set the priority of communication through the first communication link to be higher than the priority of PA2 data, thereby preferentially performing communication through the first communication link during the durations 2318a, 2318b, 2318c. For example, the electronic device 2300 may communicate with the sink device 2306 during the durations 2318a, 2318c, and receive a PA2 packet 2322a during the duration 2318b.

For example, when a first communication period 2324 corresponding to an interval between the durations 2318a, 2318b, 2318c is shorter than the PA2 period 2314c, the electronic device 2300 may set the priority of PA2 data to be higher than the priority of communication through the first communication link, thereby preferentially performing reception of PA2 data (e.g., PA2 packets 2314a, 2322a, 2322b) over communication through the first communication link during the durations 2318a, 2318b, 2318c. For example, the electronic device 2300 may receive PA packets 2314a, 2322b during the durations 2318a, 2318c, and communicate with the sink device 2306 during the duration 2318b.

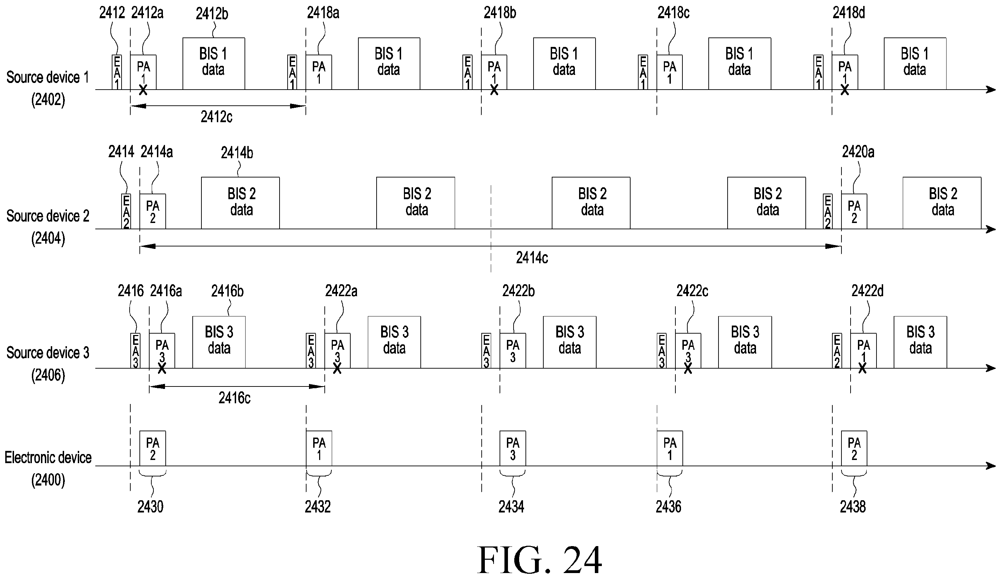

FIG. 24 is a view illustrating an operation of receiving PA packets during an overlapping duration according to an embodiment of the disclosure.

Referring to FIG. 24, source device 1 2402 (e.g., BIS source device 1 902) may transmit an EA1 packet 2412 (e.g., at least one ADV_EXT_IND packet 502 and/or at least one AUX_ADV_IND packet 504) at a designated time (e.g., an arbitrary EA event), transmit a PA1 packet 2412a (e.g., an AUX_SYNC_IND packet 506) during a first duration of a first time duration indicated by the EA1 packet 2412, and transmit BIS1 data 2412b (e.g., at least one R packet and at least one L packet) at a time (e.g., BIS events) indicated by the PA1 packet 2412a. Source device 1 2402 may periodically transmit PA1 data (e.g., PA1 packets 2412a, 2418a, 2418b, 2418c, 2418d) during durations of a designated interval (e.g., PA1 period 2412c). The PA1 packets 2412a, 2418a, 2418b, 2418c, 2418d may include identical or different BIG parameters.

Source device 2 2404 (e.g., BIS source device 2 904) may transmit an EA2 packet 2414 (e.g., at least one ADV_EXT_IND packet 502 and/or at least one AUX_ADV_IND packet 504) at a designated time (e.g., an arbitrary EA event), transmit a PA2 packet 2414a (e.g., an AUX_SYNC_IND packet 506) during a first duration of a second time duration indicated by the EA2 packet 2414, and transmit BIS2 data 2414b (e.g., at least one R packet and at least one L packet) at a time (e.g., BIS events) indicated by the PA2 packet 2414a. Source device 2 2404 may periodically transmit PA2 data (e.g., PA2 packets 2414a, 2420a) during durations of a designated interval (e.g., PA2 period 2414c).

In an embodiment, a transmission interval (e.g., PA2 period 2414c) of the PA2 packets 2414a, 2420a may be longer than transmission intervals (e.g., PA1 period 2412c and PA3 period 2416c) of the PA1 packet 2412a or the PA3 packet 2416a (e.g., the PA2 period 2414c is four times the PA1 period 2412c).

Source device 3 2406 (e.g., BIS source device 3 906) may transmit an EA3 packet 2416 (e.g., at least one ADV_EXT_IND packet 502 and/or at least one AUX_ADV_IND packet 504) at a designated time (e.g., an arbitrary EA event), transmit a PA3 packet 2416a (e.g., an AUX_SYNC_IND packet 506) during a first duration of a third time duration indicated by the EA3 packet 2416, and transmit BIS3 data 2416b (e.g., at least one R packet and at least one L packet) at a time (e.g., BIS events) indicated by the PA3 packet 2416a. Source device 3 2406 may periodically transmit PA3 data (e.g., PA3 packets 2416a, 2422a, 2422b, 2422c, 2422d) during durations of a designated interval (e.g., PA3 period 2416c). A transmission interval (e.g., PA3 period 2416c) of the PA3 packets 2416a, 2422a, 2422b, 2422c, 2422d may be identical to a transmission interval (e.g., PA1 period 2412c) of the PA1 packets 2412a, 2418a, 2418b, 2418c, 2418d, but may not be synchronized.

The electronic device 2400 may identify that transmissions of the PA1 packet 2412a, the PA2 packet 2414a, and the PA3 packet 2416a partially overlap. In an embodiment, the electronic device 2400 may receive the PA2 packet 2414a during a duration 2430 for PA2 data, based on identifying that a transmission interval (e.g., PA2 period 2414c) of the PA2 packet 2414a is longer than transmission intervals (e.g., PA1 period 2412c and PA3 period 2416c) of the PA1 packet 2412a or the PA3 packet 2416a. In an embodiment, the electronic device 2400 may decrease the priority of a PA2 packet 2420a, based on successfully receiving the PA2 packet 2414a.

The electronic device 2400 may identify that transmissions of a PA1 packet 2418a and a PA3 packet 2422a partially overlap. In an embodiment, the electronic device 2400 may receive the PA1 packet 2418a during a duration 2432 for PA1 data, based on the EA1 packet 2412 being received before the EA3 packet 2416 among the EA packets 2412, 2416. During the duration 2432, the electronic device 2400 may give up reception of the PA3 packet 2422a.

The electronic device 2400 may identify that transmissions of a PA1 packet 2418b and a PA3 packet 2422b partially overlap. In an embodiment, the electronic device 2400 may receive a PA3 packet 2422b during a duration 2434 for PA3 data, based on the PA1 packet 2418a being successfully received during a previous duration for PA1 data (e.g., the duration 2432). During a next duration 2434 for PA1 data, the electronic device 2400 may give up reception of the PA1 packet 2418b. Similarly, the electronic device 2400 may receive a PA1 packet 2418c without receiving a PA3 packet 2422c during a duration 2436 for PA3 data, based on transmissions of the PA1 packet 2418c and the PA3 packet 2422c partially overlapping.

Based on PA1 data (e.g., PA1 packets 2418a, 2422c) and PA3 data (e.g., a PA3 packet 2434) being received at least once or more during previous durations (e.g., the durations 2432, 2434, 2436), the electronic device 2400 may receive a PA2 packet 2420a during a next duration 2438 for PA2 data partially overlapping transmissions of a PA1 packet 2418d and a PA3 packet 2422d. In an embodiment, the electronic device 2400 may decrease the priority of PA2 data (not illustrated), based on successfully receiving the PA2 packet 2420a.

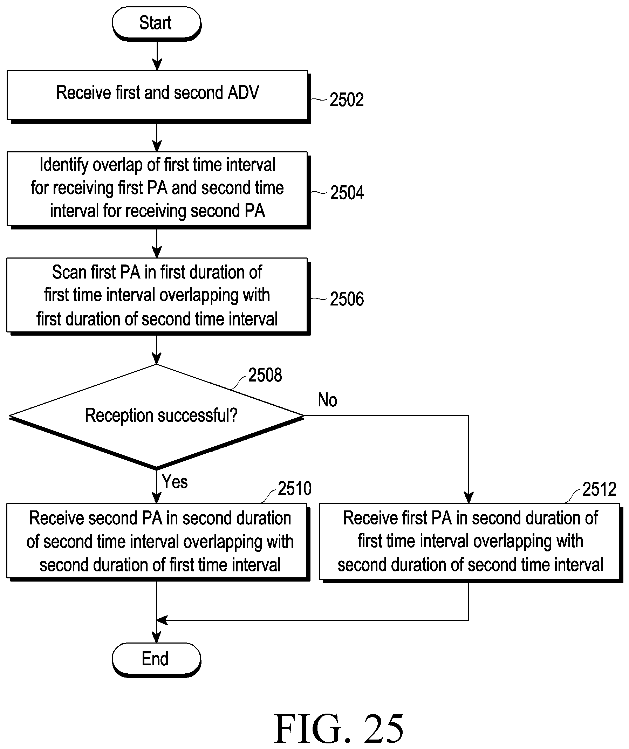

FIG. 25 illustrates a flowchart for describing a procedure of receiving multiple PA data according to whether reception of PA data succeeds according to an embodiment of the disclosure. According to embodiments, at least one of operations described below may be executed by the processor 120 of the electronic device 101. According to embodiments, the memory 130 of the electronic device 101 may store instructions that, when executed by the processor 120, enable the electronic device 101 to perform at least one of the operations described below. According to embodiments, at least one of operations to be described below may be omitted, modified, or executed in a different order.

Referring to FIG. 25, in operation 2502, the electronic device 101 (e.g., the processor 120) may receive a first advertising packet (e.g., EA data) broadcast from source electronic device 1 (e.g., BIS source device 1 902), and receive a second advertising packet (e.g., EA data) broadcast from source electronic device 2 (e.g., BIS source device 2 904).

In operation 2504, the electronic device 101 (e.g., the processor 120) may identify that a first time duration during which a first periodic advertising (PA) packet is transmitted from source electronic device 1 902 and a second time duration during which a second periodic advertising (PA) packet is transmitted from source electronic device 2 904 at least partially overlap, based on the first advertising packet and the second advertising packet. In an embodiment, operation 2504 may include operations 1004 and 1006 of FIG. 10.

In operation 2506, the electronic device 101 (e.g., the processor 120) may perform PA scanning to receive a first PA packet during a first duration of the first time duration overlapping a first duration of the second time duration. In an embodiment, the electronic device 101 (e.g., the processor 120) may preferentially receive the first PA packet, based on priorities of the first PA packet and the second PA packet according to any one of the above-described embodiments.

In operation 2508, the electronic device 101 (e.g., the processor 120) may determine whether the first PA packet has been successfully received during the first duration of the first time duration. The electronic device 101 (e.g., the processor 120) may fail to receive the first PA packet for various reasons, such as, e.g., degradation of a wireless channel condition. If reception of the first PA packet succeeds, the electronic device 101 (e.g., the processor 120) may proceed to operation 2510. On the other hand, if reception of the first PA packet fails, the electronic device 101 (e.g., the processor 120) may proceed to operation 2512.

In operation 2510, the electronic device 101 (e.g., the processor 120) may receive a second PA packet during a second duration of the second time duration overlapping a second duration of the first time duration. In an embodiment, the electronic device 101 (e.g., the processor 120) may receive the second PA packet during a next duration (e.g., the second duration of the second time duration), based on identifying that the first PA packet has been successfully received at least once.

In operation 2512, the electronic device 101 (e.g., the processor 120) may receive the first PA packet during a second duration of the first time duration overlapping a second duration of the second time duration. In an embodiment, the electronic device 101 (e.g., the processor 120) may receive the first PA packet again during a next duration (e.g., the second duration of the first time duration), based on identifying that reception of the first PA packet did not succeed.

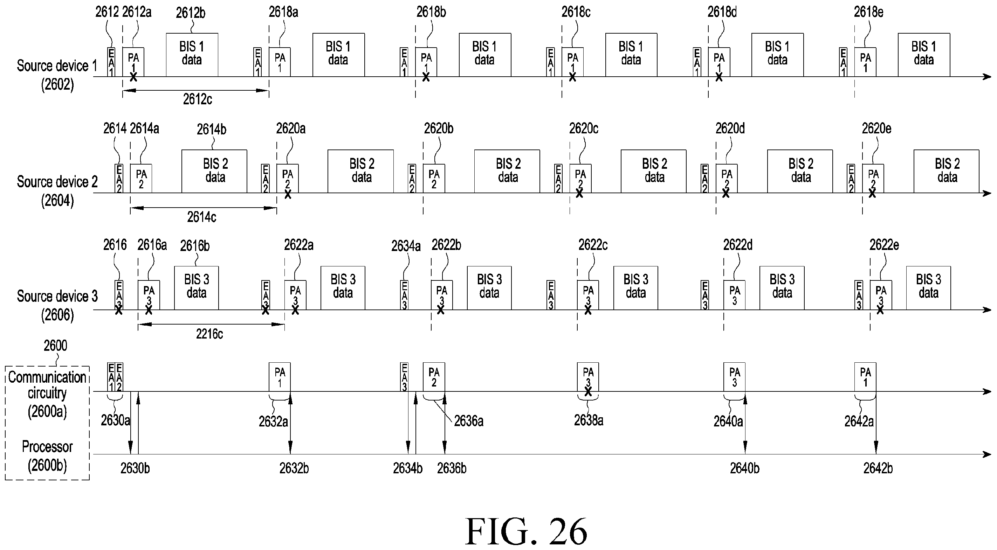

FIG. 26 is a view illustrating an operation of determining priorities of PA packets according to an embodiment of the disclosure.

Referring to FIG. 26, source device 1 2602 (e.g., BIS source device 1 902) may transmit an EA1 packet 2612 (e.g., at least one ADV_EXT_IND packet 502 and/or at least one AUX_ADV_IND packet 504), transmit a PA1 packet 2612a (e.g., an AUX_SYNC_IND packet 506) during a first duration of a first time duration indicated by the EA1 packet 2612, and transmit BIS1 data 2612b (e.g., at least one R packet and at least one L packet) at a time (e.g., BIS events) indicated by the PA1 packet 2612a. Source device 1 2602 may periodically transmit PA1 data (e.g., PA1 packets 2612a, 2618a, 2618b, 2618c, 2618d, 2618e) during durations of a designated interval (e.g., PA1 period 2612c).

Source device 2 2604 (e.g., BIS source device 2 904) may transmit an EA2 packet 2614 (e.g., at least one ADV_EXT_IND packet 502 and/or at least one AUX_ADV_IND packet 504) at a designated time, transmit a PA2 packet 2614a (e.g., an AUX_SYNC_IND packet 506) during a first duration of a second time duration indicated by the EA2 packet 2614, and transmit BIS2 data 2614b (e.g., at least one R packet and at least one L packet) at a time (e.g., BIS events) indicated by the PA2 packet 2614a. Source device 2 2604 may periodically transmit PA2 data (e.g., PA2 packets 2614a, 2620a, 2620b, 2620c, 2620d, 2620e) during durations of a designated interval (e.g., PA2 period 2614c).

Source device 3 2606 (e.g., BIS source device 3 906) may transmit an EA3 packet 2616 (e.g., at least one ADV_EXT_IND packet 502 and/or at least one AUX_ADV_IND packet 504), transmit a PA3 packet 2616a (e.g., an AUX_SYNC_IND packet 506) during a first duration of a third time duration indicated by the EA3 packet 2616, and transmit BIS3 data 2616b (e.g., at least one R packet and at least one L packet) at a time (e.g., BIS events) indicated by the PA3 packet 2616a. Source device 3 2606 may periodically transmit PA3 data (e.g., PA3 packets 2616a, 2622a, 2622b, 2622c, 2622d, 2622e) during durations of a designated interval (e.g., PA3 period 2616c).

The communication circuitry 2600a (e.g., the wireless communication module 192) of the electronic device 2600 (e.g., the electronic device 101) may receive the EA1 packet 2612 from source device 1 2602 and the EA2 packet 2614 from source device 2 2604 during a time duration 2630a through BLE scanning (e.g., EA scanning). The communication circuitry 2600a of the electronic device 2600 (e.g., the electronic device 101) may detect the presence of source device 1 2602 and source device 2 2604 providing BIS services through the EA1 packet 2612 and the EA2 packet 2614. In operation 2630b, the communication circuitry 2600a may transmit a source discovery report indicating that source device 1 2602 and source device 2 2604 have been detected to a processor 2600b (e.g., the processor 120) included in the electronic device 2600, and receive a PA synchronization command instructing to receive PA data of source device 1 2602 and source device 2 2604 from the processor 2600b.

In an embodiment, based on the EA1 packet 2612 and the EA2 packet 2614, the electronic device 2600 may identify that a first time duration during which PA1 data (e.g., PA1 packets 2612a, 2618a, 2618b, 2618c, 2618d, 2618e) is transmitted by source device 1 2602 and a second time duration during which PA2 data (e.g., PA2 packets 2614a, 2620a, 2620b, 2620c, 2620d, 2620e) is transmitted by source device 2 2604 partially overlap each other. In an embodiment, the electronic device 2600 (e.g., the processor 2600b) may set a first priority of PA1 data to be higher than a second priority of PA2 data, based on the EA1 packet 2612 being received before the EA2 packet 2614.

Based on the set first priority and second priority, the electronic device 2600 (e.g., the communication circuitry 2600a) may receive a PA1 packet 2618a during a time duration 2632a during which transmissions of the PA1 packet 2618a and a PA2 packet 2620a partially overlap. During the time duration 2632a, reception of the PA2 packet 2620a may be given up. In operation 2632b, the electronic device 2600 (e.g., the communication circuitry 2600a) may transmit a PA report including the PA1 packet 2618a to the processor 2600b. After the PA1 packet 2618a is received and synchronized to BIS1 of source electronic device 1 2602, the electronic device 2600 may set the first priority of PA1 data to be lower than the second priority of PA2 data.

After the time duration 2632a, the electronic device 2600 (e.g., the communication circuitry 2600a) may detect the presence of source device 3 2604 by receiving an EA3 packet 2634 from source device 3 2606. In operation 2634b, the communication circuitry 2600a may transmit a source discovery report indicating that source device 3 2606 has been detected to the processor 2600b, and receive a PA synchronization command instructing to receive PA data of source device 3 2606 from the processor 2600b.

In an embodiment, based on the EA1 packet 2612, the EA2 packet 2614, and the EA3 packet 2634a, the electronic device 2600 may identify that a third time duration during which PA3 data (e.g., PA3 packets 2616a, 2622a, 2622b, 2622c, 2622d, 2622e) is transmitted by source device 3 2606 partially overlaps the first time duration and the second time duration. In an embodiment, the electronic device 2600 may set a third priority of PA3 data to be lower than the second priority of PA2 data and higher than the first priority of PA1 data, based on the PA1 packet 2618a being successfully received and the EA2 packet 2614 being received before the EA3 packet 2634a.

Based on the set first priority, second priority, and third priority, the electronic device 2600 (e.g., the communication circuitry 2600a) may receive a PA2 packet 2620b during a time duration 2636a during which transmissions of a PA1 packet 2618b, the PA2 packet 2620b, and a PA3 packet 2622b partially overlap. During the time duration 2636a, reception of the PA1 packet 2618b and the PA3 packet 2622b may be given up. In operation 2636b, the electronic device 2600 (e.g., the communication circuitry 2600a) may transmit a PA report including the PA2 packet 2620b to the processor 2600b. After the PA2 packet 2620b is received and synchronized to BIS2 of source electronic device 2 2604, the electronic device 2600 may set the second priority of PA2 data to be lower than the third priority of PA3 data and the first priority of PA1 data. In other words, PA3 data may have the highest priority.

The electronic device 2600 (e.g., the communication circuitry 2600a) may attempt to receive a PA3 packet 2622c having the highest priority during a time duration 2638a during which transmissions of a PA1 packet 2618c, a PA2 packet 2620c, and the PA3 packet 2622c partially overlap. During the time duration 2638a, reception of the PA1 packet 2618c and the PA2 packet 2622c may be given up. During the time duration 2638a, the electronic device 2600 may fail to receive the PA3 packet 2622c. Based on failing to receive the PA3 packet 2622c, the electronic device 2600 may not change the priority of PA3 data.

After the time duration 2638a, the electronic device 2600 (e.g., the communication circuitry 2600a) may attempt to receive a PA3 packet 2622d still having the highest priority during a time duration 2640a during which transmissions of a PA1 packet 2618d, a PA2 packet 2620d, and the PA3 packet 2622d partially overlap. In operation 2640b, the electronic device 2600 may transmit a PA report including the PA3 packet 2622d to the processor 2600b, based on the PA3 packet 2622d being successfully received during the time duration 2640a. The electronic device 2600 may set the third priority of PA3 data to be lower than the first priority of PA1 data and the second priority of PA2 data. In other words, PA1 data may have the highest priority.

After the time duration 2640a, the electronic device 2600 (e.g., the communication circuitry 2600a) may receive a PA1 packet 2618e having the highest priority during a time duration 2642a during which transmissions of the PA1 packet 2618e, a PA2 packet 2620e, and a PA3 packet 2622e partially overlap. In operation 2642b, the electronic device 2600 may transmit a PA report including the PA1 packet 2618e to the processor 2600b, based on the PA1 packet 2618e being successfully received during the time duration 2642a. The electronic device 2600 may change the first priority of PA1 data to be lower than the second priority of PA2 data and the third priority of PA3 data.

In an embodiment, the electronic device 2600 (e.g., the processor 2600b) may adjust priorities of PA reception according to a received signal strength (e.g., received signal strength indication (RSSI)) measured for PA data. In an embodiment, after the electronic device 2600 receives a PA1 packet 2612a from source electronic device 1 2602 and a PA3 packet 2616a from source electronic device 3 2606, if an RSSI of the PA1 packet 2612a is -50 dBm and an RSSI of the PA3 packet 2616a is -80 dBm, the electronic device 2600 may determine that receiving BIS1 from source electronic device 1 2602 located nearby is more efficient than receiving BIS3 from source electronic device 3 2606 located far away, and set the priority of PA1 data to be higher than the priority of PA3 data.

In an embodiment, the electronic device 2600 (e.g., the processor 2600b) may adjust priorities of PA reception according to a reception quality of PA data. In an embodiment, when the electronic device 2600 consecutively fails to receive PA2 data (e.g., PA2 packets 2620c, 2620d, 2620e), the electronic device 2600 may give up reception of PA2 data (e.g., delete the priority) and continue to receive other PA data (e.g., PA1 data or PA3 data).

In an embodiment, the electronic device 2600 (e.g., the processor 2600b) may determine to receive PA data in order of receiving EA data (e.g., the EA1 packet 2612, the EA2 packet 2614, and the EA3 packet 2616) from different source electronic devices (e.g., source electronic device 1 2602, source electronic device 2 2604, and source electronic device 3 2602). In an embodiment, the electronic device 2600 may set the highest priority for PA data (e.g., PA1 data) corresponding to the EA data that is received first.

FIG. 27 is a view illustrating an operation of displaying BIS search results according to an embodiment of the disclosure.

Referring to FIG. 27, the electronic device 2700 (e.g., the electronic device 101) may discover multiple source devices (e.g., source device 1 902, source device 2 904, and source device 3 906) as a result of BIS searching (e.g., EA scanning). In an embodiment, the electronic device 2700 (e.g., the electronic device 101) may detect the presence of source device 1, source device 2, and source device 3 based on receiving EA data from source device 1, source device 2, and source device 3, and display a search result screen 2702 including information 2704 of source device 1, information 2706 of source device 2, and information 2708 of source device 3.

When the electronic device 2700 (e.g., the electronic device 101) fails to receive some PA data due to at least partial overlap of time durations (e.g., a first time duration, a second time duration, and a third time duration) during which multiple source devices (e.g., source device 1 902, source device 2 904, and source device 3 906) transmit PA data, the electronic device 2700 may display information (e.g., a user interface 2706a and/or a message 2710) indicating that unreceived broadcast information is present.

In an embodiment, when the electronic device 2700 receives both EA1 data and PA1 data of source device 1, the information 2704 of source device 1 may include device information (e.g., "Smartphone S23") acquired from the EA1 data and broadcast description information (e.g., "Top 100 Songs of 2023") acquired from the PA1 data. In an embodiment, when the electronic device 2700 receives both EA3 data and PA3 data of source device 3, the information 2708 of source device 3 may include device information (e.g., "[TV] SS 65-inch") acquired from the EA3 data and broadcast description information (e.g., "Channel XYZ") acquired from the PA3 data.

In an embodiment, when the electronic device 2700 receives EA2 data of source device 2 but fails to receive PA2 data due to overlap another signal (e.g., PA1 data, PA3 data, or an external electronic device (e.g., the first electronic device 202 or the second electronic device 204)), the information 2706 of source device 2 may include device information (e.g., a device address, "AA:BB:XX:XX:11:22") acquired from the EA2 data, and may not include broadcast description information. Based on identifying that PA2 data was not received due to overlap of PA2 data and PA3 data, the electronic device 2700 may include a user interface 2706a (e.g., an input object of "Receive broadcast information") prompting the user whether to receive broadcast information, in the information 2706 of source device 2. Based on receiving a user input (e.g., a touch) on the user interface 2706a, the electronic device 2700 may change the priority of PA2 data to the highest value (e.g., a value higher than the priorities of PA1 data and PA3 data), and receive at least one PA2 packet during a next duration of PA2 data.

In an embodiment, based on identifying that at least one PA data (e.g., PA2 data) was not received, the electronic device 2700 may display a message 2710 (e.g., "Unable to receive predetermined broadcast information.") indicating that unreceived broadcast information is present.

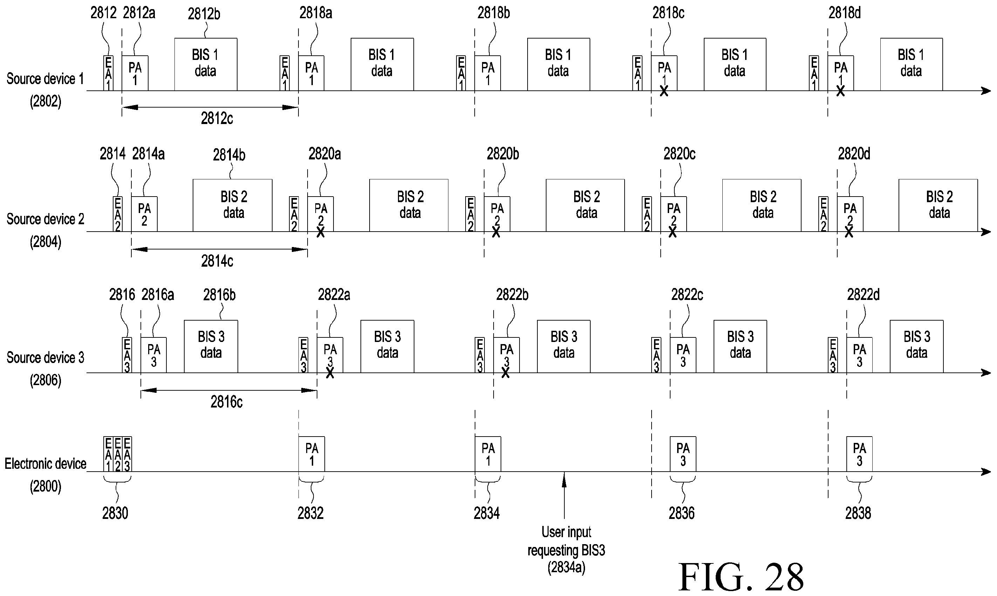

FIG. 28 is a view illustrating an operation of receiving PA data based on a user input according to an embodiment of the disclosure.

Referring to FIG. 28, source device 1 2802 (e.g., BIS source device 1 902) may transmit an EA1 packet 2812 (e.g., at least one ADV_EXT_IND packet 502 and/or at least one AUX_ADV_IND packet 504), transmit a PA1 packet 2812a (e.g., an AUX_SYNC_IND packet 506) during a first duration, and transmit BIS1 data 2812b (e.g., at least one R packet and at least one L packet) at a time indicated by the PA1 packet 2812a. Source device 1 2802 may periodically transmit PA1 data (e.g., PA1 packets 2812a, 2818a, 2818b, 2818c, 2818d) during durations of a designated interval (e.g., PA1 period 2812c).

Source device 2 2804 (e.g., BIS source device 2 904) may transmit an EA2 packet 2814 (e.g., at least one ADV_EXT_IND packet 502 and/or at least one AUX_ADV_IND packet 504) at a designated time, transmit a PA2 packet 2814a (e.g., an AUX_SYNC_IND packet 506) during a first duration, and transmit BIS2 data 2814b (e.g., at least one R packet and at least one L packet) at a time indicated by the PA2 packet 2814a. Source device 2 2804 may periodically transmit PA2 data (e.g., PA2 packets 2814a, 2820a, 2820b, 2820c, 2820d) during durations of a designated interval (e.g., PA2 period 2814c).

Source device 3 2806 (e.g., BIS source device 3 906) may transmit an EA3 packet 2816 (e.g., at least one ADV_EXT_IND packet 502 and/or at least one AUX_ADV_IND packet 504) at a designated time, transmit a PA3 packet 2816a (e.g., an AUX_SYNC_IND packet 506) during a first duration, and transmit BIS3 data 2816b (e.g., at least one R packet and at least one L packet) at a time indicated by the PA3 packet 2816a. Source device 3 2806 may periodically transmit PA3 data (e.g., PA3 packets 2816a, 2822a, 2822b, 2822c, 2822d) during durations of a designated interval (e.g., PA3 period 2816c).

During a time duration 2830, the electronic device 2800 (e.g., the electronic device 101) may detect the presence of source device 1 2802, source device 2 2804, and source device 3 2606 providing BIS services by receiving the EA1 packet 2812 from source device 1 2802, the EA2 packet 2814 from source device 2 2804, and the EA3 packet 2816 from source device 3 2806 through BLE scanning (e.g., EA scanning). Based on the EA1 packet 2812, the EA2 packet 2814, and the EA3 packet 2816, the electronic device 2800 may identify that a first time duration during which PA1 data (e.g., PA1 packets 2812a, 2818a, 2818b, 2818c, 2818d) is transmitted by source device 1 2802, a second time duration during which PA2 data (e.g., PA2 packets 2814a, 2820a, 2820b, 2820c, 2820d) is transmitted by source device 2 2804, and a third time duration during which PA3 data (e.g., PA3 packets 2816a, 2822a, 2822b, 2822c, 2822d) is transmitted by source device 3 2206 partially overlap each other.

The electronic device 2800 may identify a time duration 2832 during which transmissions of a PA1 packet 2818a, a PA2 packet 2820a, and a PA3 packet 2822a partially overlap. In an embodiment, the electronic device 2800 may receive the PA1 packet 2818a during the time duration 2832, based on the EA1 packet 2812 being received first among the EA packets 2812, 2814, 2816. During the time duration 2832, the electronic device 2800 may not receive the PA2 packet 2820a and the PA3 packet 2822a.

After receiving the PA1 packet 2818a during the time duration 2832, the electronic device 2800 may identify a time duration 2834 during which transmissions of a PA1 packet 2818b, a PA2 packet 2820b, and a PA3 packet 2822b partially overlap. In an embodiment, the electronic device 2800 may receive a PA1 packet 2818b during the time duration 2834, based on being configured to consecutively receive the same PA data. During the time duration 2834, the electronic device 2800 may not receive the PA2 packet 2820b and the PA3 packet 2822b.

Based on unreceived PA data (e.g., at least one of PA2 packets 2820a, 2820b or PA3 packets 2822a, 2822b) existing, the electronic device 2800 may display information (e.g., the user interface 2706a and/or the message 2710) indicating that unreceived broadcast information is present. In an embodiment, the electronic device 2800 may display a first user interface (e.g., the user interface 2706a) prompting whether to receive broadcast information of source device 2 2804 and/or a second user interface (e.g., the user interface 2706a) prompting whether to receive broadcast information of source device 3 2806.

After the time duration 2834, in operation 2834a, the electronic device 2800 may receive a user input (e.g., a touch) requesting BIS3 through the second user interface. After the user input is received, the electronic device 2800 may identify a time duration 2836 during which transmissions of a PA1 packet 2818c, a PA2 packet 2820c, and a PA3 packet 2822c partially overlap. In an embodiment, the electronic device 2800 may stop reception of PA1 data and receive a PA3 packet 2822c during the time duration 2836, based on the user input. During the time duration 2836, the electronic device 2800 may not receive the PA1 packet 2818c and the PA2 packet 2820c.

After receiving the PA3 packet 2822c during the time duration 2836, the electronic device 2800 may identify a time duration 2838 during which transmissions of a PA1 packet 2818d, a PA2 packet 2820d, and a PA3 packet 2822d partially overlap. In an embodiment, the electronic device 2800 may receive a PA3 packet 2822d during the time duration 2838, based on being configured to consecutively receive the same PA data. During the time duration 2838, the electronic device 2800 may not receive the PA1 packet 2818d and the PA2 packet 2820d.

An electronic device 101 according to an embodiment may include communication circuitry 190, at least one processor 120 operatively coupled to the communication circuitry, and memory 130 storing instructions. The instructions may, when executed by the at least one processor individually or collectively, cause the electronic device to receive a first advertising packet broadcast from a first source device and a second advertising packet broadcast from a second source device. The instructions may, when executed by the at least one processor individually or collectively, cause the electronic device to, based on the first advertising packet and the second advertising packet, acquire first synchronization information related to a first periodic advertising (PA) packet periodically broadcast from the first source device and second synchronization information related to a second PA packet periodically broadcast from the second source device. The instructions may, when executed by the at least one processor individually or collectively, cause the electronic device to, based on the first synchronization information and the second synchronization information, identify that time durations in which the first PA packet is receivable at least partially overlap time durations in which the second PA packet is receivable. The instructions may, when executed by the at least one processor individually or collectively, cause the electronic device to, based on a first time duration in which the first PA packet is receivable being at least partially overlapped with a second time duration in which the second PA packet is receivable, refrain from receiving the second PA packet during the second time duration and receive the first PA packet during the first time duration. The instructions may, when executed by the at least one processor individually or collectively, cause the electronic device to, after receiving the first PA packet, based on a third time duration in which the first PA packet is receivable being at least partially overlapped with a fourth time duration in which the second PA packet is receivable, refrain from receiving the first PA packet during the third time duration and receive the second PA packet during the fourth time duration.

In an embodiment, the instructions may, when executed by the at least one processor individually or collectively, cause the electronic device to, based on identifying that the time durations in which the first PA packet is receivable at least partially overlap the time durations in which the second PA packet is receivable, display information 2704 of the first source device and/or information 2706 of the second source device.

In an embodiment, the information 2706 of the second source device may include a second user interface 2706a querying a user whether to receive broadcast information of the second source device.

In an embodiment, the instructions may, when executed by the at least one processor individually or collectively, cause the electronic device to, based on receiving a user input via the first user interface, receive the first PA packet prior to receiving the second PA packet.

In an embodiment, the instructions may, when executed by the at least one processor individually or collectively, cause the electronic device to, after receiving the second PA packet during the fourth time duration, based on a fifth time duration in which the first PA packet is receivable being at least partially overlapped with a sixth time duration in which the second PA packet is receivable, refrain from receiving the second PA packet during the sixth time duration and receive the first PA packet during the fifth time duration.

In an embodiment, the instructions may, when executed by the at least one processor individually or collectively, cause the electronic device to, after receiving the second PA packet during the fourth time duration, based on failing to receive the first PA packet during a fifth time duration that at least partially overlaps a sixth time duration in which the second PA packet is receivable, receive the first PA packet during a seventh time duration that at least partially overlaps an eighth time duration in which the second PA packet is receivable.

In an embodiment, the instructions may, when executed by the at least one processor individually or collectively, cause the electronic device to, based on identifying that the first time duration precedes the second time duration, receive the first PA packet during the first time duration.

In an embodiment, the instructions may, when executed by the at least one processor individually or collectively, cause the electronic device to, based on identifying that a first interval between the first time duration and the third time duration is longer than a second interval between the second time duration and the fourth time duration, receive the first PA packet during the first time duration.

In an embodiment, the instructions may, when executed by the at least one processor individually or collectively, cause the electronic device to identify that a communication link between the electronic device and an external electronic device is established, based on the first synchronization information, identify that the time durations in which the first PA packet is receivable at least partially overlap time durations allocated for communication with the external electronic device, based on a fifth time duration in which the first PA packet is receivable being at least partially overlapped with a sixth time duration for communication with the external electronic device, refrain from communicating with the external electronic device during the sixth time duration and receive the first PA packet during the fifth time duration, and based on a seventh time duration in which the first PA packet is receivable being at least partially overlapped with an eighth time duration for communication with the external electronic device, refrain from receiving the first PA packet during the seventh time duration and communicate with the external electronic device through the communication link during the eighth time duration.

In an embodiment, the instructions may, when executed individually or collectively by the at least one processor, cause the electronic device to receive the first PA packet in the fifth time interval prior to communication with the external electronic device, based on identifying that a first interval between the fifth time interval and the seventh time interval is shorter than a second interval between the sixth time interval and the eighth time interval.

According to an embodiment of the disclosure, in a non-transitory computer-readable storage medium storing one or more programs is provided, the one or more programs may include instructions that, when executed individually or collectively by at least one processor 120 of an electronic device 101, cause the electronic device to: receive a first advertising packet broadcast from a first source device and a second advertising packet broadcast from a second source device, acquire, based on the first advertising packet and the second advertising packet, first synchronization information related to a first periodic advertising (PA) packet periodically broadcast from the first source device and second synchronization information related to a second PA packet periodically broadcast from the second source device, identify, based on the first synchronization information and the second synchronization information, that time intervals during which the first PA packet is receivable at least partially overlap time intervals during which the second PA packet is receivable, based on a first time interval during which the first PA packet is receivable and a second time interval during which the second PA packet is receivable at least partially overlapping, receive the first PA packet in the first time interval without receiving the second PA packet in the second time interval, and after receiving the first PA packet, based on a third time interval during which the first PA packet is receivable and a fourth time interval during which the second PA packet is receivable at least partially overlapping, receive the second PA packet in the fourth time interval without receiving the first PA packet in the third time interval.

In an embodiment, the instructions may cause the electronic device to display information 2704 of the first source device and/or information 2706 of the second source device, based on identifying that the time intervals during which the first PA packet is receivable at least partially overlap the time intervals during which the second PA packet is receivable.

In an embodiment, the information 2706 of the second source device may include a second user interface 2706a querying a user whether to receive broadcast information of the second source device.

In an embodiment, the instructions may cause the electronic device to receive the first PA packet prior to the second PA packet, based on receiving a user input through the first user interface.

In an embodiment, the instructions may cause the electronic device to, after receiving the second PA packet in the fourth time interval, based on a fifth time interval during which the first PA packet is receivable and a sixth time interval during which the second PA packet is receivable at least partially overlapping, receive the first PA packet in the fifth time interval without receiving the second PA packet in the sixth time interval.

In an embodiment, the instructions may cause the electronic device to, after receiving the second PA packet in the fourth time interval, based on failing to receive the first PA packet in a fifth time interval at least partially overlapping a sixth time interval during which the second PA packet is receivable, receive the first PA packet in a seventh time interval at least partially overlapping an eighth time interval during which the second PA packet is receivable.

In an embodiment, the instructions may cause the electronic device to receive the first PA packet in the first time interval, based on identifying that the first time interval precedes the second time interval.

In an embodiment, the instructions may cause the electronic device to receive the first PA packet in the first time interval, based on identifying that a first interval between the first time interval and the third time interval is longer than a second interval between the second time interval and the fourth time interval.

In an embodiment, the instructions may cause the electronic device to: identify that a communication link between the electronic device and an external electronic device is established, identify, based on the first synchronization information, that the time intervals during which the first PA packet is receivable at least partially overlap time intervals allocated for communication with the external electronic device, based on a fifth time interval during which the first PA packet is receivable and a sixth time interval for communication with the external electronic device at least partially overlapping, receive the first PA packet in the fifth time interval without communicating with the external electronic device in the sixth time interval, and based on a seventh time interval during which the first PA packet is receivable and an eighth time interval for communication with the external electronic device at least partially overlapping, communicate with the external electronic device through the communication link in the eighth time interval without receiving the first PA packet in the seventh time interval.

According to an embodiment of the disclosure, a method performed by an electronic device may include an operation of receiving a first advertising packet broadcast from a first source device and a second advertising packet broadcast from a second source device. The method may include an operation of acquiring, based on the first advertising packet and the second advertising packet, first synchronization information related to a first periodic advertising (PA) packet periodically broadcast from the first source device and second synchronization information related to a second PA packet periodically broadcast from the second source device. The method may include an operation of identifying, based on the first synchronization information and the second synchronization information, that time intervals during which the first PA packet is receivable at least partially overlap time intervals during which the second PA packet is receivable. The method may include an operation of, based on a first time interval during which the first PA packet is receivable and a second time interval during which the second PA packet is receivable at least partially overlapping, receiving the first PA packet in the first time interval without receiving the second PA packet in the second time interval. The method may include an operation of, after receiving the first PA packet, based on a third time interval during which the first PA packet is receivable and a fourth time interval during which the second PA packet is receivable at least partially overlapping, receiving the second PA packet in the fourth time interval without receiving the first PA packet in the third time interval.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., the memory 390, internal memory 136 or external memory 138) that is readable by a machine (e.g., the electronic device 202 or 204 or the electronic device 101). For example, a processor (e.g., the processor 310 or processor 120) of the machine (e.g., the electronic device 202 or 204 or electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
communication circuitry (190);
at least one processor (120) operatively coupled to the communication circuitry; and
memory (130) storing instructions,
wherein the instructions, when executed by the at least one processor individually or collectively, cause the electronic device to:
receive a first advertising packet broadcast from a first source device and a second advertising packet broadcast from a second source device;
based on the first advertising packet and the second advertising packet, acquire first synchronization information related to a first periodic advertising (PA) packet periodically broadcast from the first source device, and second synchronization information related to a second PA packet periodically broadcast from the second source device;
based on the first synchronization information and the second synchronization information, identify that time durations in which the first PA packet is receivable at least partially overlap with time durations in which the second PA packet is receivable;
based on a first time duration in which the first PA packet is receivable, being at least partially overlapped with a second time duration in which the second PA packet is receivable, refrain from receiving the second PA packet during the second time duration and receive the first PA packet during the first time duration; and
after receiving the first PA packet, based on a third time duration in which the first PA packet is receivable, being at least partially overlapped with a fourth time duration in which the second PA packet is receivable, refrain from receiving the first PA packet during the third time duration and receive the second PA packet during the fourth time duration.

2. The electronic device of claim 1, wherein the instructions, when executed by the at least one processor individually or collectively, cause the electronic device to, based on identifying that the time durations in which the first PA packet is receivable at least partially overlap with the time durations in which the second PA packet is receivable, display information (2704) of the first source device and/or information (2706) of the second source device.

3. The electronic device of claim 2, wherein the information (2706) of the second source device includes a second user interface (2706a) that is configured to prompt the user whether to receive broadcast information of the second source device.

4. The electronic device of claim 3, wherein the instructions, when executed by the at least one processor individually or collectively, cause the electronic device to, based on receiving a user input via the first user interface, receive the first PA packet prior to receiving the second PA packet.

5. The electronic device of any one of claims 1 to 4, wherein the instructions, when executed by the at least one processor individually or collectively, cause the electronic device to, after receiving the second PA packet during the fourth time duration, based on a fifth time duration in which the first PA packet is receivable, being at least partially overlapped with a sixth time duration in which the second PA packet is receivable, refrain from receiving the second PA packet during the sixth time duration and receive the first PA packet during the fifth time duration.

6. The electronic device of claim 1, wherein the instructions, when executed by the at least one processor individually or collectively, cause the electronic device to, after receiving the second PA packet during the fourth time duration, based on failing to receive the first PA packet during a fifth time duration that at least partially overlaps with a sixth time duration in which the second PA packet is receivable, receive the first PA packet during a seventh time duration that at least partially overlaps with an eighth time duration in which the second PA packet is receivable.

7. The electronic device of any one of claims 1 to 6, wherein the instructions, when executed by the at least one processor individually or collectively, cause the electronic device to, based on identifying that the first time duration precedes the second time duration, receive the first PA packet during the first time duration.

8. The electronic device of any one of claims 1 to 7, wherein the instructions, when executed by the at least one processor individually or collectively, cause the electronic device to, based on identifying that a first interval between the first time duration and the third time duration is longer than a second interval between the second time duration and the fourth time duration, receive the first PA packet during the first time duration.

9. The electronic device of any one of claims 1 to 8, wherein the instructions, when executed by the at least one processor individually or collectively, cause the electronic device to:
identify that a communication link between the electronic device and an external electronic device is established;
based on the first synchronization information, identify that the time durations in which the first PA packet is receivable, at least partially overlap with time durations assigned for communication with the external electronic device;
based on a fifth time duration in which the first PA packet is receivable, being at least partially overlapped with a sixth time duration for communication with the external electronic device, refrain from communicating with the external electronic device during the sixth time duration and receive the first PA packet during the fifth time duration; and
based on a seventh time duration in which the first PA packet is receivable, being at least partially overlapped with an eighth time duration for communication with the external electronic device, refrain from receiving the first PA packet during the seventh time duration and communicate with the external electronic device through the communication link during the eighth time duration.

10. The electronic device of claim 9, wherein the instructions, when executed by the at least one processor individually or collectively, cause the electronic device to, based on identifying that a first interval between the fifth time duration and the seventh time duration is shorter than a second interval between the sixth time duration and the eighth time duration, receive the first PA packet during the fifth time duration prior to communication with the external electronic device.

11. A non-transitory computer-readable storage medium storing one or more programs, wherein the one or more programs, when executed by at least one processor (120) of an electronic device (101) individually or collectively, cause the electronic device to:
receive a first advertising packet broadcast from a first source device and a second advertising packet broadcast from a second source device;
based on the first advertising packet and the second advertising packet, acquire first synchronization information related to a first periodic advertising (PA) packet periodically broadcast from the first source device, and second synchronization information related to a second PA packet periodically broadcast from the second source device;
based on the first synchronization information and the second synchronization information, identify that time durations in which the first PA packet is receivable at least partially overlap time durations in which the second PA packet is receivable;
based on a first time duration in which the first PA packet is receivable, being at least partially overlapped with a second time duration in which the second PA packet is receivable, refrain from receiving the second PA packet during the second time duration and receive the first PA packet during the first time duration; and
after receiving the first PA packet, based on a third time duration in which the first PA packet is receivable, being at least partially overlapped with a fourth time duration in which the second PA packet is receivable, refrain from receiving the first PA packet during the third time duration and receive the second PA packet during the fourth time duration.

12. The storage medium of claim 11, wherein the instructions cause the electronic device to, based on identifying that the time durations in which the first PA packet is receivable at least partially overlap the time durations in which the second PA packet is receivable, display information (2704) of the first source device and/or information (2706) of the second source device, wherein the information (2706) of the second source device includes a second user interface (2706a) configured to prompt the user whether to receive broadcast information of the second source device.

13. The storage medium of claim 11 or 12, wherein the instructions cause the electronic device to:
after receiving the second PA packet during the fourth time duration, based on a fifth time duration in which the first PA packet is receivable, being at least partially overlapped with a sixth time duration in which the second PA packet is receivable, refrain from receiving the second PA packet during the sixth time duration and receive the first PA packet during the fifth time duration; and
after receiving the second PA packet during the fourth time duration, based on failing to receive the first PA packet during a fifth time duration that at least partially overlaps a sixth time duration in which the second PA packet is receivable, receive the first PA packet during a seventh time duration that at least partially overlaps an eighth time duration in which the second PA packet is receivable.

14. The storage medium of any one of claims 11 to 13, wherein the instructions cause the electronic device to, based on identifying that the first time duration precedes the second time duration, receive the first PA packet during the first time duration.

15. The storage medium of any one of claims 11 to 14, wherein the instructions cause the electronic device to, based on identifying that a first interval between the first time duration and the third time duration is longer than a second interval between the second time duration and the fourth time duration, receive the first PA packet during the first time duration.
